(19) Europäisches Patentamt
European Patent Office
Office européen des brevets

(11) EP 1 473 845 A1

(12) EUROPEAN PATENT APPLICATION

(43) Date of publication:
**03.11.2004 Bulletin 2004/45**

(51) Int Cl.[7]: **H04B 1/40**, H04B 1/30

(21) Application number: **03009616.8**

(22) Date of filing: **29.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Sony Ericsson Mobile Communications AB**
**221 88 Lund (SE)**

(72) Inventors:
- **Kozlov, Vladimir, Sony Ericsson Mobile Com. 85609 Aschheim-Dornach (DE)**
- **Repin, Alexander, Sony Ericsson Mobile Com. 85609 Aschheim-Dornach (DE)**
- **Itkin, Grigory, Sony Ericsson Mobile Com. 85609 Aschheim-Dornach (DE)**

(74) Representative: **Rupp, Christian, Dipl.Phys. et al**
**Mitscherlich & Partner**
**Patent- und Rechtsanwälte**
**Sonnenstrasse 33**
**80331 München (DE)**

(54) **Front end of a multi-standard two-channel direct-conversion quadrature receiver**

(57) The invention pertains to a front end (500) of a digital multi-standard two-channel direct-conversion quadrature receiver having a single unbalanced RF input port (502) and two pairs of balanced baseband output ports (528a+b, 528c+d), a first downlink channel (Rxl-Rx3) for receiving wideband RF signals and a second downlink channel (Rx4-Rx7) for receiving narrowband RF signals. Said analog front end (500) comprises at least a first number (505a-c) and a second number of reception chains (505d-g) as well as a first signal processing chain (511a) and a second signal processing chain (511b), which are each split up into an in-phase (528a+c) and a quadrature channel (528b+d). In particular, said single-chip analog front end (500) comprises means (502, 504, 506a-g, 508a-g, 510a+b, 512a+b, 514, 516a-d, 518a+b, 520a-d, 522a-d, 524a-d, and 526a-d) for selectively processing modulated RF signal spectra of at least three wideband downlink channels (Rx1, Rx2, and Rx3) received via one reception chain (505a-c) of said first number, that are assigned to three non-overlapping frequency bands (UMTS FDD Rx, UMTS TDD1 Rx, and UMTS TDD2 Rx), and at least four narrowband downlink channels (Rx4, Rx5, Rx6, and Rx7) received via one reception chain (505d-g) of said second number, which are assigned to at least four further non-overlapping frequency bands (GSM/GPRS 850 MHz Rx and GSM/GPRS 900 MHz Rx, GSM/GPRS (DCS) 1,800 MHz Rx and GSM/GPRS (PCS) 1,900 MHz Rx), from the RF passband to the complex baseband ($I_1$, $Q_1$, $I_2$, $Q_2$).

The obtained baseband signal spectra are then digitized by means of two pairs of analog-to-digital-converters (526a+b) and sigma-delta analog-to-digital converters (526c+d), respectively, whose sampling rates ($f_{s,k}$) and quantization resolutions ($R_k$) can be adapted to the bandwidth ($B_k$) and the required dynamic range ($S_k/N_k$) of these baseband signal spectra, respectively.

FIG 5

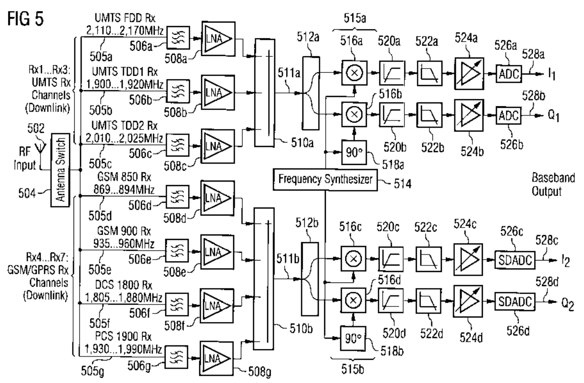




Printed by Jouve, 75001 PARIS (FR)

## Description

FIELD AND BACKGROUND OF THE INVENTION

The present invention relates to a front end of a digital multi-standard two-channel direct-conversion quadrature receiver with f.e. quad-band GSM/GPRS and UMTS capability comprising a single unbalanced RF input port and two pairs of balanced baseband output ports, a first downlink channel for receiving wideband RF signals and a second downlink channel for receiving narrowband RF signals.

The invention can advantageously be applied to a wireless communication device in a cellular telecommunication system based on the UMTS and/or GSM/GPRS standard for selectively receiving, processing and directly down-converting modulated RF signal spectra of at least seven non-overlapping frequency bands (UMTS FDD Rx, UMTS TDD1 Rx, and UMTS TDD2 Rx, GSM/GPRS 850 MHz Rx, GSM/GPRS 900 MHz Rx, GSM/GPRS (DCS) 1,800 MHz Rx, and GSM/GPRS (PCS) 1,900 MHz Rx) from the RF passband to the baseband.

The evolution of wireless communications in the area of cellular telephony and wireless local area networks (WLANs) has led to a multiplicity of wireless standards. For this reason, there is an increasing demand for mobile terminals being able to cope with different standards. Especially wideband multi-standard radio frequency (RF) transceivers working in the frequency range between 900 MHz and 5,200 MHz are predicted to play an important role in future wireless communications. With cellular and cordless phone standards operating in the 900-MHz and 1.8-GHz bands, the Global Positioning System (GPS) in the 1.5-GHz band, and WLANs in the 2.4-GHz band, it is desirable to combine two or more standards in a single mobile unit. Since new generation terminals are equipped to support data transmission via UMTS and GSM/GPRS, multi-standard transceivers working in the UMTS Frequency-Division Duplex (FDD) and UMTS Time-Division Duplex (TDD) frequency bands that provide a quad-band functionality for the GSM/GPRS standard (GSM/ GPRS 850 MHz, GSM/ GPRS 900 MHz, GSM/GPRS (DCS) 1,800 MHz, GSM/GPRS (PCS) 1,900 MHz) in both uplink (Tx) and downlink (Rx) direction are needed. The principal challenge in this task thereby arises from stringent cost and form-factor requirements, which make it necessary to work in a wide frequency range with minimal amounts of replicated hardware components, in particular concerning filters, resonators, oscillators, and frequency synthesizers.

In today's wireless communication devices, three types of receivers are typically used: the heterodyne receiver, the direct-conversion receiver, and the low intermediate frequency (IF) receiver. In order to better understand the proposed approach of the solution according to the present invention, it is necessary to briefly describe the main characteristics, advantages and drawbacks of the aforementioned receivers.

Many modem RF receivers rely on traditional heterodyne technologies, which translate the signal of interest to at least one intermediate frequency (IF) before it is down-converted to the baseband. A heterodyne receiver requires two or more local oscillators (LOs) and external filters, including one or more IF channel-select filters as well as one image-reject filter. Said filters are usually implemented with discrete components and difficult to realize with low-quality components integrated on the chip. For this reason, heterodyne receivers can not fully be integrated.

A simplified block diagram of a heterodyne receiver 100a is shown in Fig. 1a. The incoming RF signal from the receive (Rx) antenna 102 is first filtered by a band-select filter 104 ($BPF_1$) that removes the out-of-band signals. It is then amplified by a low-noise amplifier 106 (LNA), which also suppresses the contribution of the noise from the succeeding stages. The LNA output is then filtered by an image-reject filter 108 ($BPF_2$) to remove the image, whose center frequency $\omega_{im}$ has an offset $\Delta\omega$ of twice the intermediate frequency $\omega_{IF}$ from the center frequency $\omega_1$ of the desired channel signal ($\Delta\omega := |\omega_{im} - \omega_1| = 2 \cdot \omega_{IF}$), before being down-converted to the intermediate frequency (IF) by a mixer 110. A channel-select filter 114 ($BPF_3$) then performs channel selection at the IF, and after that demodulation or detection is carried out to retrieve the desired information. This single-IF scheme, however, can lead to severe tradeoffs between channel sensitivity and selectivity. If the IF is high, the image appears far away from the band of the desired signal and can easily be suppressed by a band-pass filter with typical cut-off characteristics. However, the channel-select filter 114 now requires a very high quality (Q) factor, which is defined as the ratio of the center frequency to the 3-dB bandwidth, and filters with very high Q-factor are difficult to design. If the IF is low, channel selection has a more relaxed requirement, but a proper image suppression becomes harder to achieve. Fig. 1e shows the problems for high and low IF. In practice, more than one IF mixer stage can be used to alleviate the conflict between channel sensitivity and selectivity. For example, in a dual-IF heterodyne receiver, the RF signal is first down-converted to an IF that is high enough to allow easy suppression of the image. It is then down-converted to a second IF that is much lower than the first one to ease channel selection.

Conventional superheterodyne receivers typically comprise two or three down-conversions stages to provide channel sensitivity and selectivity needed for the respective receiver. A triple-conversion superheterodyne receiver 100c according to the state of the art - a heterodyne receiver with three IF stages - is depicted in Fig. 1c. For each down-conversion stage, one local oscillator 106a", 106b", or 106c", one down-conversion mixer 108a", 108b", or 108c" as well as band-pass filtering and low-noise amplification means 104a", 104b", or 104c" are respectively required, that increase hardware complexity, cost and difficulty of manufacture. Consequently, this receiver is not suitable for a single-chip integrated circuit design. However, as superheterodyne receivers have good performance, particularly with regard to image rejection capability and channel selectivity, they are used in a wide variety of applications.

In contrast thereto, direct-conversion (homodyne) receivers require fewer discrete components since bulky and expensive off-chip image-reject and channel-select filtering stages, which are used in conventional dual- or triple-conversion superheterodyne receivers to meet channel selectivity and sensitivity requirements, are not needed. Thus, the primary advantage of the direct-conversion over the heterodyne receiver is the improved amenability to monolithic integration of the entire receiver system. Compared to other receivers such as digital IF sampling receivers and heterodyne receivers, a direct-conversion receiver does not suffer from image problems, can be implemented on a single chip, and has a comparatively low power consumption. Nevertheless, the direct-conversion receiver involves several drawbacks. For instance, the obtained baseband signal is substantially corrupted by DC offset due to self-mixing and flicker noise in the analog base-band circuits - a type of low-frequency noise with a spectral power density being inversely proportional to the frequency, that typically occurs in conventional semiconductor devices. In wide-band communication systems based on WCDMA offset compensation can be performed by AC-coupling the signal path with high-pass filters (HPFs) having reasonable time constants without any significant degradation in signal quality. If channel-select filtering in the WCDMA system is performed in digital domain, high-resolution and highspeed analog-to-digital converters (ADCs) are needed, which may lead to a relatively high power consumption.

In a homodyne or direct-conversion receiver 100b as depicted in Fig. 1b, the incoming RF signal is down-converted to the baseband (zero frequency) in one step by mixing with an oscillator output of the same frequency. The resulting baseband signal is then filtered by means of a high-quality switched-capacitor low-pass filter 114' to select the desired channel. As the incoming RF signal is directly down-converted to the baseband without any IF stage, the direct-conversion receiver 100b does not suffer from the image problem. Another advantage of the homodyne architecture is its simplicity as the direct-conversion receiver 100b does not require any high-frequency channel-select filters to be implemented off-chip. However, the homodyne architecture suffers from a number of implementation issues. The major disadvantage is that severe DC offsets can be generated at the output of the applied mixer 110' when a leakage signal from the local oscillator 112' (LO) is mixed with the LO signal itself. This could saturate the following stages and affect the signal detection process. Furthermore, since the mixer output is a baseband signal, it can easily be corrupted by the flicker noise of the mixer 110', especially when the incoming RF signal is weak.

In a direct-conversion quadrature receiver 300 as depicted in Fig. 3, which uses two distinct channels to form the in-phase (I) and quadrature (Q) components of a received RF signal, the baseband signal constellation of the obtained quadrature signals is severely deteriorated by I/Q mismatches, which significantly degrade signal-to-noise (S/N) performance. While I/Q mismatches can be reduced through a careful circuit design and fabrication procedure, both DC offset and flicker noise problems are still difficult to deal with and require further efforts to overcome.

Direct IF receivers take advantage of undersampling to eliminate one or more of the tuned analog IF stages. The employed analog-to-digital converter (ADC) thereby acts as a mixer which down-converts the IF signal to the baseband for digital processing. While ADC technology has improved significantly over time, only a few of the ADCs that are on the market today are able to provide the performance needed for IF sampling applications. According to the Nyquist sampling theorem, the sampling rate $f_s$ of an ADC must be at least twice the maximum frequency $f_{max}$ of the band-limited signal to be sampled in order to have the signal be uniquely reconstructed without aliasing. However, a higher sampling rate $f_s$ is often instrumental in reducing the required selectivity and hence the cost and complexity of an analog anti-aliasing filter. Furthermore, resolution and dynamic performance are degraded as compared to lower-speed alternatives, and power dissipation of the ADC may also increase with the sampling rate.

A block diagram of a conventional IF sampling receiver 100d according to the state of the art is shown in Fig. 1d. Thereby, received RF signals are first down-converted to an intermediate frequency (IF), which is performed by the down-conversion mixer 108a'''. After that, the obtained IF signal is further down-converted to the baseband by means of a digital signal processor 112''' (DSP). It can thus be seen that this IF sampling receiver is actually a triple-conversion superheterodyne receiver. However, one difference between these two receiver architectures is that, due to the absence of IF stages, all of the conversion gain must take place prior to the ADC 110''', either in the RF section before or in the IF stages after the down-conversion mixer 108a'''. This requires that the selected components have a high third-order intercept point (IP3) - a standard reference number used to calculate intermodulation distortions, which indicates how well a receiver performs in the presence of strong interfering adjacent channels - since all channel selection is performed in the digital domain.

Compared to other receiver architectures such as direct-conversation receivers and double-conversion wide-band IF receivers, a digital IF sampling receiver architecture has several advantages: First, an IF sampling receiver does not suffer from DC offset and 1/f flicker noise as well as I/Q mismatching problems. Moreover, there is no need for analog matching means to enhance image rejection. Since the ADC is placed closer to the antenna than in other receiver architectures, more radio functions can be written in software (software-defined radio, SDR) and embedded in a programmable logic device. The flexibility of the radio terminal to adapt to different systems or to advances in services or technology is made possible by using reconfigurable hardware components such as digital signal processors (DSP), field-programmable gate arrays (FPGA), etc. This flexibility also relies on the radio to be wideband in nature and as linear as possible, so as to minimize distortion of the signal. However, ADC performance still is not sufficient enough to perform digitization at RF. In particular, the analog input bandwidth, sampling rate, dynamic range and therefore quantization resolution of the ADC have to be improved significantly if wideband front ends and sampling at RF are to become a reality. As a result of placing the ADC closer to the antenna, the DSP must be able to cope with an increased amount of programmable radio functionality. It is needless to say that power consumption of all components of an SDR is a very important factor to consider, particularly in handheld terminals.

Low-IF receivers are a special case of the superheterodyne receiver architecture. Thereby, the desired RF signal spectrum is down-converted to an IF close to the baseband where the signal is then filtered before being demodulated. A low-IF receiver is not sensitive to parasitic effects such as DC offset voltages and self-mixing products and can be implemented in a highly integrated way. However, this receiver architecture severely suffers from image signals coming from adjacent channels which can not totally be removed by RF band-pass filtering.

Fig. 2 illustrates a conceptual example of a dual-band receiver architecture 200 where two heterodyne receivers are deployed to translate the frequency bands of two different cellular standards (GSM/GPRS 900 MHz Rx, GSM/GPRS (DCS) 1,800 MHz Rx) to a common intermediate frequency. These two standards thereby incorporate identical multiple-access and duplexing techniques, channel bandwidths, and modulation formats. After a channel selection filtering is performed to attenuate spurious out-of-band components in the signal spectrum of the obtained IF signals, these two signal paths are merged. Sharing a single analog-to-digital converter 212 and a single digital signal processor 214 between the two frequency bands, this architecture nonetheless requires a large number of external, expensive analog hardware components as well as driving and sensing compliance with standard impedance levels. In addition, tradeoffs between image rejection and channel selection often require a second down-conversion mixer in each path, which further increases hardware complexity.

To achieve multi-standard capability, more flexible transceiver architectures are necessary. Reconfigurable (software-defined) radio systems, which are currently being developed, enable mobile transceivers to adapt to different cellular standards. This is possible by the use of programmable hardware components (e.g. FPGAs, PALs, PLDs, etc.) to which relevant software-defined radio functions can be downloaded. For base stations, where power consumption and size is less restricted than in mobile terminals, SDR components are already available on the market, i.e. for Wideband Code-Division Multiple Access (W-CDMA) applications. More radio functions being defined in software and hence encapsulated in the digital domain of the receiver imply that a more flexible radio transceiver design is possible. SDR requires to place the analog-to-digital converter (ADC) which is used to digitize received signals as close to the receive antenna as possible such that as many radio functions as possible can be defined in software and executed by programmable hardware components. The sooner the desired signal is digitized, the better. Once in digital domain, the signal can easily be tuned, filtered and processed.

Alternatives to the superheterodyne receiver that may be suitable for software radios are receiver architectures employing direct-conversion and band-pass sampling. Both methods reduce the number of analog components, wherein band-pass sampling allows digitization further up the receive chain and down-conversion of the signal to a low IF without the use of down-conversion mixers. However, the sampling process is never ideal since many factors limit performance. One of these limiting factors is the aperture jitter in the sample-and-hold function of the applied ADC - the variation of the sampling period from one sample to another, which becomes more serious at high sampling rates.

A single-chip direct-conversion GSM/GPRS transceiver serving as a tri-band solution for GSM 900-, DCS 1800- and PCS 1900-based wireless telephone handsets that is also compatible with UMTS requirements - the TRF6150 RF transceiver 400 depicted in Fig. 4 - has recently been introduced by Texas Instruments. This highly integrated RF transceiver architecture provides implementation flexibility and ease of design by enabling original equipment manufacturers of wireless handsets to develop smaller, less power-consuming devices with fewer components and at a cost-effective price. The TRF6150 RF transceiver 400 thereby integrates a power amplifier control circuitry 426, microwave and millimeter-wave amplifiers such as low-noise amplifiers 408a-c (LNAs) and variable-gain amplifiers 418a+b (VGAs), low-drop voltage regulators 424, two voltage-controlled oscillators 434 and 444 (VCOs), a main and an auxiliary phase-locked loop (PLL) frequency synthesizer 440 and 438. The required external components comprise a dual-band power amplifier 450 (PA), a single VCO 448d capable of dual-band operation, two front-end filters 406a+b - one for GSM and one for DCS - tank circuits (not shown), filtering and phase-amplitude detector means 442, 448c+e of a phase-regulating circuitry 448 and another matching circuitry, a switchplexer 404, and a set of passive resistors and capacitors (not shown), which enables a reduction of approximately 15 % in required board space. For tri-mode applications, a third front-end filter is also required. The dual-band GSM RF section of the depicted TRF6150 RF transceiver 400 requires a chip space of less than 10 $cm^2$ on a single-sided printed circuit board (PCB) and is packaged in a 64-lead thin quad flatpack (TQFP). By using a fully symmetrical scheme, the applied transceiver architecture reduces the coupling between the VCOs 434 and 444 and the LNAs 408a-c as much as possible.

## BRIEF DESCRIPTION OF THE STATE OF THE ART

In US 6,026,114 a wireless RF transceiver apparatus in a time-division full-duplex spread-spectrum communication system is disclosed, which can be used for transmitting or receiving a single oscillation frequency during transmission or reception of an RF signal in synchronization with a lock time by deploying a phase-locked loop (PLL) frequency synthesizer which rapidly changes its oscillation frequency according to a control voltage.

A wireless RF transceiver capable of performing direct-conversion, time-division, full-duplex, spread-spectrum communication based on differential binary phase-shift keying (D-BPSK) modulation is disclosed in US 6,104,745.

In US 6,408,193 B1 a cellular telephone is described which receives a first communication signal from a cell-site station and transmits a second communication signal to the cell-site station.

The invention described in US 2002/0015453 A1 pertains to a wireless RF receiver and a method of receiving for an FDMA/TDMA radio system. According to one embodiment of this invention, said RF receiver comprises means for simultaneously receiving modulated RF signals at different carrier frequencies in the same frequency band (GSM), a direct digital frequency synthesizer (DDFS) for generating oscillator signals with different oscillator frequencies, a down-conversion mixer for simultaneously mixing said RF signals with one oscillator signal at a time to an IF band, and band-pass filtering means for channel selection.

In WO 02/47282 A2 a multipath wideband RF receiver architecture with a multiplicity of RF signal paths covering different but overlapping frequency bands as well as a multiplicity of baseband signal paths is disclosed. Thereby, said paths are reconfigurable for sharing said RF and baseband paths in different ways in order to facilitate processing of received signals in different modes.

The invention described in EP 1 098 449 A1 refers to a receiver for receiving signals with different frequency bandwidths in different frequency bands. Thereby, GSM or UMTS signals can be received. The receiver comprises a local oscillator (LO) and two down-conversion mixers to directly down-convert received RF signals to the baseband. Since quadrature demodulation is applied, in-phase (I) and quadrature (Q) signals are available at the output ports of the applied baseband circuitry.

A multi-band RF transceiver architecture for transmitting or receiving phase-modulated RF signals from a GSM/GPRS (DCS) 1,800 MHz frequency band and for transmitting or receiving phase- and amplitude-modulated RF signals from a further frequency band in the range between 2,000 and 2,300 MHz according to the European UMTS standard and the Japanese W-CDMA standard, respectively, is disclosed in WO 02/056491 A1.

## OBJECT OF THE UNDERLYING INVENTION

In view of the above-described state of the art, it is the object of the present invention to provide a cost-effective, energy-saving multi-band receiver circuitry with small chip space, which can advantageously be applied to receive downlink signals whose frequencies take on different values.

The aforementioned object is achieved by means of the features describes in the independent claims. Advantageous features are defined in the subordinate claims.

## SUMMARY OF THE INVENTION

The present invention is basically dedicated to a front end of a digital multi-standard two-channel direct-conversion quadrature receiver comprising a single unbalanced RF input port and two pairs of balanced baseband output ports, a first downlink channel for receiving wideband RF signals and a second downlink channel for receiving narrowband RF signals.

The front end can advantageously be applied to a wireless communication device in a cellular telecommunication system based f.e. on the UMTS FDD, UMTS TDD1/2, GSM-850, GSM-900, GSM-1800 (DCS), and GSM-1900 (PCS) standard. Said analog front end comprises at least a first number and a second number of reception chains as well as a first signal processing chain and a second signal processing chain, which are each split up into an in-phase ($I_1$, $I_2$) and a quadrature ($Q_1$, $Q_2$) channel. In particular, said single-chip analog front end comprises means for selectively receiving, processing and directly down-converting modulated RF signal spectra of at least three wideband downlink channels Rx1, Rx2, and Rx3 received via one reception chain of said first number, which are assigned to three non-overlapping frequency bands (UMTS FDD Rx, UMTS TDD1 Rx, and UMTS TDD2 Rx), and at least four narrowband downlink channels Rx4, Rx5, Rx6, and Rx7 received via one reception chain of said second number, which are assigned to at least four further non-overlapping frequency bands (GSM/GPRS 850 MHz Rx and GSM/GPRS 900 MHz Rx, GSM/GPRS (DCS) 1,800 MHz Rx and GSM/GPRS (PCS) 1,900 MHz Rx), from the RF passband to the complex baseband ($I_1$, $Q_1$, $I_2$, $Q_2$).

An obtained baseband signal spectrum is then digitized by means of a pair of analog-to-digital-converters (ADCs) or sigma-delta analog-to-digital converters (SDADCs), respectively, whose sampling rates ($f_{s1}$, $f_{s2}$ or $f_{s3}$, $f_{s4}$)

and quantization resolutions ($R_1$, $R_2$ or $R_3$, $R_4$) can be adapted to the bandwidths ($B_1$, $B_2$ or $B_3$, $B_4$) and the required dynamic ranges ($S_1/N_1$, $S_2/N_2$ or $S_3/N_3$, $S_4/N_4$) of said baseband signal spectra, respectively.

BRIEF DESCRIPTION OF THE DRAWINGS

Advantageous features and aspects of the present invention will become evident from the following description, the appended claims, and the accompanying drawings, wherein the invention is explained in more detail. Thereby,

Fig. 1a depicts a schematic block diagram showing a conventional single-conversion heterodyne receiver architecture according to the state of the art,

Fig. 1b depicts a schematic block diagram showing a conventional direct-conversion (homodyne) receiver architecture according to the state of the art,

Fig. 1c depicts a schematic block diagram showing a conventional superheterodyne receiver architecture with three intermediate frequency (IF) stages (a triple-conversion receiver) according to the state of the art,

Fig. 1d depicts a schematic block diagram showing a conventional IF sampling receiver architecture according to the state of the art,

Fig. 1e shows four diagrams illustrating the tradeoff between image rejection and interferer suppression in case a received RF signal spectrum is down-converted to a relatively high or low intermediate frequency, respectively,

Fig. 2 depicts a schematic block diagram showing a conceptual example of a conventional dual-band receiver architecture according to the state of the art,

Fig. 3 depicts a schematic block diagram showing a conventional direct-conversion quadrature receiver architecture according to the state of the art,

Fig. 4 shows a single-chip direct-conversion GSM/GPRS transceiver architecture according to state of the art using Texas Instruments' TRF6150 RF transceiver unit, which serves as a tri-band solution for GSM 900-, DCS 1800- and PCS 1900-based wireless telephone handsets and is also compatible with UMTS requirements, and

Fig. 5 shows a single-chip analog front end of a multi-standard two-channel direct-conversion quadrature receiver architecture according to the present invention.

DETAILED DESCRIPTION OF THE UNDERLYING INVENTION

In the following, one embodiment of the underlying invention as depicted in Fig. 5 shall be explained in detail. The meaning of the symbols designated with reference numerals and signs in Figs. 1a to 5 can be taken from an annexed table.

According to one embodiment of the present invention, the front end 500 comprises filtering, amplification, down-conversion and frequency synthesizing means for selectively receiving, processing and down-converting modulated RF signal spectra received via the aforementioned downlink channels Rx1 to Rx7 as depicted in Fig. 5, in particular

- at least seven band-select (duplexer) filters 506a-g, placed at the input ports of the reception chains 505a-g, respectively,

- two demodulation stages 515a+b, each equipped with a pair of down-conversion mixers 516a+c or 516b+d that are assigned to the in-phase channel 528a/c and quadrature channel 528b/d of the respective signal processing chain 511a/b, and two Hilbert transformers 518a+b, connected to respectively one input port of the two down-conversion mixers 516b and 516d in the quadrature channels 528b+d, providing a 90-degree phase shift of the oscillator signal for a direct down-conversion of received RF signals from the RF passband to the complex baseband ($I_1$, $Q_1$, $I_2$, $Q_2$),

- a frequency synthesizing unit 514, connected to the down-conversion mixers 516a-d in the in-phase chains 528a+c and in the quadrature chains 528b+d of the demodulation stages 515a+b, providing an essentially sinusoidal oscillator signal with a constant carrier frequency,

- at least four baseband channel-select filters 522a-d, placed at the output ports of said mixing stages 515a+b, for attenuating spurious out-of-band components contained in the signal spectra of the obtained baseband signals, and

- amplification stages consisting of low-noise amplifiers 508a-g and variable-gain amplifiers 524a-d, respectively, for amplifying the signal amplitudes of a received RF signal and/or its corresponding complex-valued baseband signal ($I_1$, $I_2$, $Q_1$, $Q_2$), wherein three wideband low noise amplifiers 508a-c ($LNA_1$ to $LNA_3$) are used for amplifying wideband RF signals received via said wideband downlink channels (Rx1, Rx2, Rx3) and four narrowband low noise amplifiers 508d-g ($LNA_4$ to $LNA_7$) are used for amplifying narrowband RF signals received via said narrowband downlink channels (Rx4, Rx5, Rx6, Rx7).

The above-described analog front end 500 comprises at least two channel-select switches 510a+b for selectively switching (S2) either said first number 505a-c or said second number of reception chains 505d-g to said first signal processing chain 511 a or said second signal processing chain 511b and signal splitting means 512a+b for respectively splitting (S3) said first signal processing chain 511a and said second signal processing chain 511b into one in-phase channel 528a+c and one quadrature channel 528b+d. In particular, said signal splitting means 512a+b are realized as impedance-matching balun transformers 512a+b, which convert unbalanced RF input signals into balanced signals, thereby isolating (S3) the unbalanced RF input port 502 from the balanced baseband output ports of the in-phase channel 528a+c and quadrature 528b+d channel of said first number 505a-c and second number of reception chains 505d-g, respectively.

Additionally, at least four high-pass filter ($HPF_{I1}$, $HPF_{Q1}$, $HPF_{I2}$, $HPF_{Q2}$), connected to the output ports of the down-conversion mixers 516a-d of the two demodulation stages 515a+b in the in-phase channels 528a+c and quadrature channels 528b+d of the two signal processing chains 511a+b, are employed to eliminate DC offsets in the corresponding baseband signals ($I_1$, $I_2$, $Q_1$, $Q_2$) of a received RF signal.

According to a further aspect of the invention, the analog front end comprises two analog-to-digital converters 526a+b (ADCs), connected to the in-phase ($I_1$) and quadrature ($Q_1$) output ports of the first signal processing chain 511a, and two sigma-delta analog-to-digital converters 526c+d (SDADCs), connected to the in-phase ($I_2$) and quadrature ($Q_2$) output ports of the second signal processing chain 511b, which provide a time- and amplitude-quantized time-domain representation of the down-converted RF signal spectrum of either said first (Rx1, Rx2, and Rx3) or said second downlink channel (Rx4, Rx5, Rx6, and Rx7).

An SDADC is an oversampling noise-shaping ADC that is equipped with a sigma-delta modulator (SDM), which performs an oversampling and uses a low-resolution converter in a noise-shaping loop to shape quantization noise power out of band, and a so-called decimator - a digital filter followed by a down-sampler, that is needed to reduce the oversampling ratio $M$ introduced by the SDM. Although the decimator is a digital filter, it functionally belongs to the digital front end. The analog-to-digital conversion itself takes place in the SDM, which can be regarded as a digital filter with two input ports and a quantizer. In the SDM two digital modulators are implemented in switched-capacitor (SC) technique, one for the in-phase (I) and one for the quadrature (Q) channel. The circuit contains a common sampling and mixing input stage converting a single continuous time-domain input signal at an intermediate frequency into discrete time-interleaved I and Q baseband signals.

In this connection, the ADCs 526a+b and/or SDADCs 526c+d are adapted to change (S5) the sampling rate ($f_{s,k}$) of the time quantization based on the signal bandwidth ($B_k$) of the respectively obtained baseband signal spectrum in such a way that a certain oversampling ratio ($M > 2$) is attained and thus the Nyquist sampling theorem

$$f_{s,k} \geq M \cdot B_k \text{ with } M := 2 \text{ and } k \in \{1, 2, 3, 4\},$$

wherein $k$ denotes the respective baseband channel index and
$M$ denotes the applied sampling factor,

is fulfilled. Moreover, said analog-to-digital converters 526a+b and/or sigma-delta analog-to-digital converters 526c+d are adapted to change (S4) the resolution ($R_k$) of the amplitude quantization (the number of bits used to represent each sample value) executed by means of the respective converters 526a and 526b or 526c and 526d dependent on the respectively required dynamic range ($S_k/N_k$) of the obtained baseband signal spectrum and thus dependent on the bandwidth ($B_j$) of the downlink channel (Rx1, Rx2, Rx3 and Rx4, Rx5, Rx6, Rx7) used for the reception of the corresponding RF signal spectrum. Thereby,$j$ is an integer value in the range between 1 and 7.

For reducing power consumption it is necessary that the quantization resolution of the two ADCs 526a+b and the two SDADCs 526c+d is defined as low as possible to meet dynamic range requirements, in particular for broadband UMTS signals, which require a rather high sampling rate to be uniquely reconstructed without aliasing according to the Nyquist theorem. A low quantization resolution $R_k$, however, is not suitable for processing narrowband GSM-850, GSM-900, GSM-1800 (DCS) or GSM-1900 (PCS) signals with a large dynamic range.

Advantageously, the RF passbands of the band-select filters (506a-g) are respectively set such that

- spectral components of RF signals received via the first downlink channel (Rx1), whose frequencies take on values from a first frequency band (UMTS FDD Rx) ranging from 2,110 MHz to 2,170 MHz,

- spectral components of RF signals received via the second downlink channel (Rx2), whose frequencies take on values from a second frequency band (UMTS TDD1 Rx) ranging from 1,900 MHz to 1,920 MHz,

- spectral components of RF signals received via the third downlink channel (Rx3), whose frequencies take on values from a third frequency band (UMTS TDD2 Rx) ranging from 2,010 MHz to 2,025 MHz,

- spectral components of RF signals received via the fourth downlink channel (Rx4), whose frequencies take on values from a fourth frequency band (GSM/GPRS 850 MHz Rx) ranging from 869 MHz to 894 MHz,

- spectral components of RF signals received via the fifth downlink channel (Rx5), whose frequencies take on values from a fifth frequency band (GSM/GPRS 900 MHz Rx) ranging from 935 MHz to 960 MHz,

- spectral components of RF signals received via the sixth downlink channel (Rx6), whose frequencies take on values from a sixth frequency band (GSM/GPRS (DCS) 1,800 MHz Rx) ranging from 1,805 MHz to 1,880 MHz, and finally

- spectral components of RF signals received via the seventh downlink channel (Rx7), whose frequencies take on values from a seventh frequency band (GSM/GPRS (PCS) 1,900 MHz Rx) ranging from 1,930 MHz to 1,990 MHz, are passed.

According to a second embodiment, the present invention pertains to a method for selectively receiving, processing and directly down-converting modulated RF signal spectra of at least three wideband downlink channels (Rx1, Rx2, Rx3), which are assigned to three non-overlapping frequency bands (UMTS FDD Rx, UMTS TDD1 Rx, and UMTS TDD2 Rx), and at least four narrowband downlink channels (Rx4, Rx5, Rx6, Rx7), which are assigned to at least four further non-overlapping frequency bands (GSM/GPRS 850 MHz Rx, GSM/GPRS 900 MHz Rx, GSM/GPRS (DCS) 1,800 MHz Rx, and GSM/GPRS (PCS) 1,900 MHz Rx), from the RF passband to the complex baseband ($I_1$, $Q_1$, $I_2$, $Q_2$).

Thereby, an RF input signal is split (S1) into seven downlink channels (Rx1, Rx2, Rx3 and Rx4, Rx5, Rx6, Rx7). After being submitted to a band-select filtering stage 506a-g for attenuating spurious out-of-band components and a low-noise amplification stage 508a-g, a modulated RF signal spectrum received via one of said three wideband downlink channels (Rx1, Rx2, Rx3) is selectively switched (S2) to a first signal processing chain 511a and a modulated RF signal spectrum received via one of said four narrowband downlink channels (Rx4, Rx5, Rx6, Rx7) is selectively switched (S2) to a second signal processing chain 511b. Furthermore, an impedance matching (S3) is performed by transforming the unbalanced RF input signals into balanced RF signals to obtain balanced baseband output signals ($I_1$, $Q_1$, $I_2$, $Q_2$).

According to a further aspect of the present invention, the time-domain representation of a down-converted RF signal is submitted to a time and amplitude quantization. Thereby, the resolution ($R_k$) of the amplitude quantization is set (S4) dependent on the required dynamic range ($S_k/N_k$) of the obtained baseband signal spectrum and thus dependent on the bandwidth ($B_j$) of the respective downlink channel (Rx1, Rx2, Rx3, Rx4, Rx5, Rx6, Rx7) used for the reception of the associated RF signal spectrum. Thereby, j is an integer value in the range between 1 and 7. Furthermore, the sampling rate ($f_{s,k}$) of the performed time quantization is adapted (S5) to the bandwidth ($B_k$) of the obtained baseband signal spectrum such that a predefined oversampling ratio ($M$) is attained and thus the Nyquist sampling theorem is fulfilled.

The invention further refers to a digital multi-standard two-channel direct-conversion quadrature receiver of a mobile telecommunication device which uses a single-chip analog front end 500 as described above for selectively receiving, processing and directly down-converting modulated RF signal spectra of at least three wideband downlink channels (Rx1, Rx2, Rx3), which are assigned to three non-overlapping frequency bands (UMTS FDD Rx, UMTS TDD1 Rx, and UMTS TDD2 Rx), and at least four narrowband downlink channels (Rx4, Rx5, Rx6, Rx7), which are assigned to at least four further non-overlapping frequency bands (GSM/GPRS 850 MHz Rx, GSM/GPRS 900 MHz Rx, GSM/GPRS (DCS) 1,800 MHz Rx, and GSM/GPRS (PCS) 1,900 MHz Rx), from the RF passband to the complex baseband ($I_1$, $Q_1$, $I_2$, $Q_2$).

Table:

| **Depicted Features and their Corresponding Reference Signs** | |
|---|---|
| No. | System Component or Procedure Step |
| 100a | schematic block diagram showing a conventional single-conversion heterodyne receiver architecture according to the state of the art |
| 100b | schematic block diagram showing a conventional direct-conversion (homodyne) receiver architecture according to the state of the art |
| 100c | schematic block diagram showing a conventional superheterodyne receiver architecture with three intermediate frequency (IF) stages (triple-conversion receiver) according to the state of the art |
| 100d | schematic block diagram showing a conventional intermediate frequency (IF) sampling receiver architecture according to the state of the art |
| 100e | four diagrams illustrating the tradeoff between image rejection and interferer. suppression when a received RF signal spectrum is down-converted to a comparatively high (diagrams 100e1 and 100e2) or low intermediate frequency (diagrams 100e3 and 100e4), respectively, wherein said RF signal spectrum comprises the spectrum of the desired channel at $\omega_1$, an image spectrum at $\omega_{im} = \omega_1 + 2 \cdot \omega_{IF}$, $\omega_{IF}$ being the intermediate frequency (IF) to which the RF signal spectrum has to be (diagrams 100e1 and 100e3) or has been down-converted (diagrams 100e2 and 100e4), respectively, a narrowband interferer, and the filter characteristics of the image-reject filter 108 and the channel-select filter 114 of the single-conversion heterodyne receiver 100a |
| 100e1 | diagram showing a received RF signal spectrum comprising the spectrum of the desired channel at $\omega_1$, an image spectrum at $\omega_{im} = \omega_1 + 2 \cdot \omega_{IF}$, wherein $\omega_{IF}$ denotes a comparatively high intermediate frequency (IF) to which the RF signal spectrum has to be down-converted, a narrowband interferer, and the filter characteristic of the image-reject filter 108 before said RF signal spectrum is submitted to the single-conversion heterodyne receiver 100a |
| 100e2 | diagram showing the down-converted RF signal spectrum comprising the down-converted RF signal spectrum of the desired channel and the down-converted image spectrum at $\omega_{IF}$ as well as the down-converted interferer and the filter characteristic of the channel-select filter 114 after the RF signal spectrum has been submitted to the single-conversion heterodyne receiver 100a for a comparatively high IF |
| 100e3 | diagram showing a received RF signal spectrum comprising the spectrum of the desired channel at $\omega_1$, an image spectrum at $\omega_{im} = \omega_1 + 2 \cdot \omega_{IF}$, wherein $\omega_{IF}$ denotes a comparatively low intermediate frequency (IF) to which the RF signal spectrum has to be down-converted, a narrowband interferer, and the filter characteristic of the image-reject filter 108 before said RF signal spectrum is submitted to the single-conversion heterodyne receiver 100a |
| 100e4 | diagram showing the down-converted RF signal spectrum comprising the down-converted RF signal spectrum of the desired channel and the down-converted image spectrum at $\omega_{IF}$ as well as the down-converted interferer and the filter characteristic of the channel-select filter 114 after the RF signal spectrum has been submitted to the single-conversion heterodyne receiver 100a for a comparatively low IF |
| 102 | Rx antenna of the single-conversion heterodyne receiver 100a |
| 102' | Rx antenna of the direct-conversion receiver 100b |
| 102" | receive (Rx) antenna of the superheterodyne receiver architecture 100c |
| 102"' | receive (Rx) antenna of the IF sampling receiver architecture 100d |
| 104 | band-select filter of the single-conversion heterodyne receiver 100a for attenuating spurious out-of-band components contained in the signal spectrum of a received RF signal, realized as a first band-pass filter ($BPF_1$) |

Table: (continued)

| Depicted Features and their Corresponding Reference Signs | |
|---|---|
| No. | System Component or Procedure Step |
| 104' | band-select filter of the direct-conversion receiver 100b for attenuating spurious out-of-band components contained in the signal spectrum of a received RF signal, realized as a band-pass filter (BPF) |
| 104a" | first combined filtering and amplification unit of the superheterodyne receiver architecture 100c , comprising an image-reject filter and a low-noise amplifier ($LNA_1$) |
| 104a"' | first combined filtering and amplification unit of the IF sampling receiver architecture 100d, comprising an image-reject filter and a low-noise amplifier ($LNA_1$) |
| 104b" | second combined filtering and amplification unit of the superheterodyne receiver architecture 100c , comprising a channel-select filter and a low-noise amplifier ($LNA_2$) |
| 104b"' | second combined filtering and amplification unit of the IF sampling receiver architecture 100d, comprising a channel-select filter and a low-noise amplifier ($LNA_2$) |
| 104c" | third combined filtering and amplification unit of the superheterodyne receiver architecture 100c, comprising a channel-select filter and a low-noise amplifier ($LNA_3$) |
| 106 | low-noise amplifier (LNA) of the single-conversion heterodyne receiver 100a |
| 106' | low-noise amplifier (LNA) of the direct-conversion receiver 100b |
| 106a" | first local oscillator of the superheterodyne receiver architecture 100c , which provides a sinusoidal oscillator signal with a tunable frequency |
| 106a"' | local oscillator of the IF sampling receiver architecture 100d, which provides a sinusoidal oscillator signal with a constant frequency |
| 106b" | second local oscillator of the superheterodyne receiver architecture 100c , which provides a sinusoidal oscillator signal with a fixed frequency |
| 106c" | third local oscillator of the superheterodyne receiver architecture 100c , which provides a sinusoidal oscillator signal with a fixed frequency |
| 108 | image-reject filter of the single-conversion heterodyne receiver 100a for suppressing image frequencies in an obtained IF signal spectrum, realized as a second band-pass filter ($BPF_2$) |
| 108a" | first down-conversion mixer of the superheterodyne receiver architecture 100c |
| 108a"' | down-conversion mixer of the IF sampling receiver architecture 100d |
| 108b" | second down-conversion mixer of the superheterodyne receiver architecture 100c |
| 108c" | third down-conversion mixer of the superheterodyne receiver architecture 100c |
| 110 | down-conversion mixer of the single-conversion heterodyne receiver 100a, driven by the local oscillator 112, for a down-conversion of a received RF signal spectrum to an IF band |
| 110' | down-conversion mixer of the direct-conversion receiver 100b, driven by the local oscillator 112', for a direct down-conversion of a received RF signal spectrum to the baseband |
| 110" | detector means of the superheterodyne receiver architecture 100c |
| 110"' | analog-to-digital converter (ADC) of the IF sampling receiver architecture 100d |
| 112 | local oscillator (LO) of the single-conversion heterodyne receiver 100a, which provides a sinusoidal oscillator signal with a tunable frequency |
| 112' | local oscillator (LO) of the direct-conversion receiver 100b, which provides a sinusoidal oscillator signal with a tunable frequency |
| 112" | digital signal processing means of the superheterodyne receiver architecture 100c |
| 112"' | digital signal processor (DSP) of the IF sampling receiver architecture 100d for further signal processing |

Table: (continued)

| Depicted Features and their Corresponding Reference Signs | |
|---|---|
| No. | System Component or Procedure Step |
| 114 | channel-select filter of the single-conversion heterodyne receiver 100a for attenuating spurious out-of-band components contained in the signal spectrum of an obtained IF output signal |
| 114' | high-quality switched-capacitor channel-select filter of the direct-conversion receiver 100b for attenuating spurious out-of-band components contained in the signal spectrum of an obtained baseband output signal |
| 200 | schematic block diagram showing a conceptual example of a conventional dual-band receiver architecture according to the state of the art |
| 202 | receive (Rx) antenna of the first reception chain of the dual-band receiver architecture 200 for receiving RF signal spectra from a first frequency band |
| 202' | receive (Rx) antenna of the second reception chain of the dual-band receiver architecture 200 for receiving RF signal spectra from a second frequency band |
| 204a | band-select filter ($BPF_1$) in the first reception chain of the dual-band receiver architecture 200 for attenuating spurious out-of-band components contained in the signal spectrum of a received RF signal |
| 204a' | band-select filter ($BPF_1$) in the second reception chain of the dual-band receiver architecture 200 for attenuating spurious out-of-band components contained in the signal spectrum of a received RF signal |
| 204b | image-reject filter ($BPF_2$) in the first reception chain of the dual-band receiver architecture 200 for suppressing image frequencies in an obtained IF signal spectrum |
| 204b' | image-reject filter ($BPF_2$) in the second reception chain of the dual-band receiver architecture 200 for suppressing image frequencies in an obtained IF signal spectrum |
| 204c | channel-select filter ($BPF_3$) in the first reception chain of the dual-band receiver architecture 200 for attenuating spurious out-of-band components contained in the signal spectrum of an obtained IF signal |
| 204c' | channel-select filter ($BPF_3$) in the second reception chain of the dual-band receiver architecture 200 for attenuating spurious out-of-band components contained in the signal spectrum of an obtained IF signal |
| 206 | low-noise amplifier (LNA) in the first reception chain of the dual-band receiver 200 |
| 206' | low-noise amplifier (LNA) in the second reception chain of the dual-band receiver 200 |
| 208 | down-conversion mixer in the first reception chain of the dual-band receiver 200 |
| 208' | down-conversion mixer in the second reception chain of the dual-band receiver 200 |
| 210 | summation element for merging the IF signals of both reception chains after channel selection is performed |
| 212 | analog-to-digital converter (ADC) of the dual-band receiver architecture 200 |
| 214 | digital signal processing (DSP) means of the dual-band receiver architecture 200 |
| 300 | schematic block diagram showing a conventional direct-conversion quadrature receiver architecture according to the state of the art |
| 302 | Rx antenna of the direct-conversion quadrature receiver 300 |
| 304 | band-select filter of the direct-conversion quadrature receiver 300 for attenuating spurious out-of-band components contained in the signal spectrum of a received RF signal, realized as a band-pass filter (BPF) |
| 306 | low-noise amplifier (LNA) of the direct-conversion quadrature receiver 300 |
| 310a | $1^{st}$ down-conversion mixer of a demodulation stage 310, driven by the LO 312, for generating the corresponding in-phase (I) signal of a received RF signal by executing a direct down-conversion of said RF signal spectrum from the passband (RF) to the baseband |

Table: (continued)

| Depicted Features and their Corresponding Reference Signs | |
|---|---|
| No. | System Component or Procedure Step |
| 310b | 2nd down-conversion mixer of the demodulation stage 310, driven by the LO 312, for generating the corresponding in-phase (I) signal of a received RF signal by executing a direct down-conversion of said RF signal spectrum from the passband (RF) to the baseband |
| 312 | local oscillator (LO) of the demodulation stage 310, connected to the input port of the 90-degree phase shifter 313 |
| 313 | 90-degree-phase shifter of the demodulation stage 310, connected to the input ports of the two down-conversion mixers 310a and 310b |
| 314a | channel-select filter in the in-phase (I) channel of the direct-conversion quadrature receiver 300 for rejecting RF signals on channels adjacent to that of the desired frequency band, realized as a low-pass filter ($LPF_I$) |
| 314b | channel-select filter in the quadrature (Q) channel of the direct-conversion quadrature receiver 300 for rejecting RF signals on channels adjacent to that of the desired frequency band, realized as a low-pass filter ($LPF_Q$) |
| 316a | variable-gain amplifier ($VGA_I$) in the in-phase (I) channel of the direct-conversion quadrature receiver 300 for amplifying the obtained in-phase signal |
| 316b | variable-gain amplifier ($VGA_I$) in the quadrature (Q) channel of the direct-conversion quadrature receiver 300 for amplifying the obtained quadrature signal |
| 318a | analog-to-digital converter ($ADC_I$), connected to the output port of the in-phase (I) channel of the direct-conversion quadrature receiver 300, which provides a time- and amplitude-quantized time-domain representation of the corresponding in-phase signal for a received RF signal spectrum |
| 318b | analog-to-digital converter ($ADC_Q$), connected to the output port of the quadrature (Q) channel of the direct-conversion quadrature receiver 300, which provides a time- and amplitude-quantized time-domain representation of the corresponding quadrature signal for the received RF signal spectrum |
| 400 | single-chip direct-conversion GSM/GPRS transceiver architecture according to state of the art using Texas Instruments' TRF6150 RF transceiver unit 401, which serves as a tri-band solution for GSM 900-, DCS 1800- and PCS 1900-based wireless telephone handsets. |
| 401 | Texas Instruments' TRF6150 RF transceiver unit 401 of the single-chip direct-conversion GSM/GPRS transceiver architecture 400 |
| 402 | Rx/Tx antenna of the single-chip direct-conversion GSM/GPRS transceiver architecture 400 |
| 404 | RF antenna switch module (ASM) or switchplexer of the single-chip direct-conversion GSM/GPRS transceiver architecture 400 |
| 406a | band-select filter ($BPF_1$), placed at the input port of the first reception chain for attenuating spurious out-of-band components contained in the signal spectrum of a first RF signal, whose passband is set such that frequencies of spectral components within a first frequency band (GSM/GPRS 900 MHz Rx) take on values from a first frequency interval ranging from 935 MHz to 960 MHz |
| 406b | band-select filter ($BPF_2$), placed at the input port of the second reception chain for attenuating spurious out-of-band components contained in the signal spectrum of a second RF signal, whose passband is set such that frequencies of spectral components within a second frequency band (GSM/GPRS (DCS) 1,800 MHz Rx) take on values from a second frequency interval ranging from 1,805 MHz to 1,880 MHz |
| 408a | low-noise amplifier ($LNA_1$) of the first reception chain for amplifying the signal amplitudes of a received RF signal spectrum whose frequencies take on values from the first frequency band (GSM/GPRS 900 MHz Rx) |
| 408b | low-noise amplifier ($LNA_2$) of the second reception chain for amplifying the signal amplitudes of a received RF signal spectrum whose frequencies take on values from the second frequency band (GSM/GPRS (DCS) 1,800 MHz Rx) |

Table: (continued)

| Depicted Features and their Corresponding Reference Signs | |
|---|---|
| No. | System Component or Procedure Step |
| 408c | low-noise amplifier ($LNA_1$) of the third reception chain for amplifying the signal amplitudes of a received RF signal spectrum whose frequencies take on values from a third frequency band (GSM/GPRS (PCS) 1,900 MHz Rx) |
| 410 | demodulation stage of the single-chip direct-conversion GSM/GPRS transceiver architecture 400 |
| 410a | 1st down-conversion mixer of a demodulation stage 410, driven by the VCO 448d, for generating the corresponding in-phase (I) signal of a received RF signal whose frequencies take on values from the first frequency band (GSM/GPRS 900 MHz Rx) by executing a direct down-conversion of said RF signal spectrum from the passband (RF) to the baseband |
| 410b | 2nd down-conversion mixer of the demodulation stage 410, driven by the VCO 448d, for generating the corresponding quadrature (Q) signal of a received RF signal whose frequencies take on values from the first frequency band (GSM/GPRS 900 MHz Rx) by executing a direct down-conversion of said RF signal spectrum from the passband (RF) to the baseband |
| 410c | 3rd down-conversion mixer of the demodulation stage 410, driven by the VCO 448d, for generating the corresponding in-phase (I) signal of a received RF signal whose frequencies take on values from the second frequency band (GSM/GPRS (DCS) 1,800 MHz Rx) by executing a direct down-conversion of said RF signal spectrum from the passband (RF) to the baseband |
| 410d | 4th down-conversion mixer of the demodulation stage 410, driven by the VCO 448d, for generating the corresponding quadrature (Q) signal of a received RF signal whose frequencies take on values from the second frequency band (GSM/GPRS (DCS) 1,800 MHz Rx) by executing a direct down-conversion of said RF signal spectrum from the passband (RF) to the baseband |
| 410e | 5th down-conversion mixer of the demodulation stage 410, driven by the VCO 448d, for generating the corresponding in-phase (I) signal of a received RF signal whose frequencies take on values from the third frequency band (GSM/GPRS (PCS) 1,900 MHz Rx) by executing a direct down-conversion of said RF signal spectrum from the passband (RF) to the baseband |
| 410f | 6th down-conversion mixer of the demodulation stage 410, driven by the VCO 448d, for generating the corresponding quadrature (Q) signal of a received RF signal whose frequencies take on values from the third frequency band (GSM/GPRS (PCS) 1,900 MHz Rx) by executing a direct down-conversion of said RF signal spectrum from the passband (RF) to the baseband |
| 412 | divide-by-two frequency divider of the demodulation stage 410, connected to respectively one input port of the down-conversion mixers 410a and 410b |
| 414a | 1st 90-degree phase shifter (Hilbert transformer) of the demodulation stage 410, connected to respectively one input port of the down-conversion mixers 410c and 410d |
| 414a | 2nd 90-degree phase shifter (Hilbert transformer) of the demodulation stage 410, connected to respectively one input port of the down-conversion mixers 410e and 410f |
| 416 | frequency doubler of the demodulation stage 410, connected to the input ports of the 90-degree phase shifters 414a and 414b |
| 418a | 1st variable-gain amplifier ($VGA_{I1}$) in the in-phase (I) channel of the reception chain |
| 418b | 1st variable-gain amplifier ($VGA_{Q1}$) in the quadrature (Q) channel of the reception chain |
| 420a | channel-select filter in the in-phase (I) channel of the reception chain, realized as a low-pass filter for removing spurious harmonics in the obtained baseband spectrum |
| 420b | channel-select filter in the quadrature (Q) channel of the reception chain, realized as a low-pass filter for removing spurious harmonics in the obtained baseband spectrum |
| 422a | 2nd variable-gain amplifier ($VGA_{I2}$) in the in-phase (I) channel of the reception chain |
| 422b | 2nd variable-gain amplifier ($VGA_{Q2}$) in the quadrature (Q) channel of the reception chain |
| 424 | low-drop voltage regulators of the TRF6150 RF transceiver unit 401 |

Table: (continued)

| Depicted Features and their Corresponding Reference Signs | |
|---|---|
| No. | System Component or Procedure Step |
| 426 | power amplifier (PA) controller of the TRF6150 RF transceiver unit 401 |
| 428 | serial interface of the TRF6150 RF transceiver unit 401 |
| 430 | modulation stage of the single-chip direct-conversion GSM/GPRS transceiver architecture 400 |
| 430a | 1st up-conversion mixer of a modulation stage 430, driven by the VCO 434, for up-converting the in-phase (I) signal of a baseband signal to be transmitted to a first (GSM/GPRS 900 MHz Rx), second (GSM/GPRS (DCS) 1,800 MHz Rx) or third RF band (GSM/GPRS (PCS) 1,900 MHz Rx) |
| 430b | 2nd up-conversion mixer of a modulation stage 430, driven by the VCO 434, for up-converting the quadrature (Q) signal of a baseband signal to be transmitted to a first (GSM/GPRS 900 MHz Rx), second (GSM/GPRS (DCS) 1,800 MHz Rx) or third RF band (GSM/GPRS (PCS) 1,900 MHz Rx) |
| 431 | summation element of the demodulation stage 430 for combining the output signals of the two up-conversion mixers 430a and 430b |
| 432 | divide-by-two frequency divider of the demodulation stage, connected to respectively one input port of the up-conversion mixers 430a and 430b |
| 434 | voltage-controlled oscillator ($VCO_1$) of a first phase control loop, connected to the low-pass filter 436 and the integer-N PLL frequency synthesizer 438 |
| 436 | low-pass filter ($LPF_1$) of the first phase control loop, connected to the integer-N PLL frequency synthesizer 438 and the VCO 434 |
| 438 | integer-N PLL frequency synthesizer of the first phase control loop (auxiliary PLL frequency synthesizer) |
| 440 | fractional-N PLL frequency synthesizer of the second phase control loop (main PLL frequency synthesizer) |
| 442 | low-pass filter ($LPF_2$) of the second phase control loop, connected to the fractional-N PLL frequency synthesizer 440 and the VCO 444 |
| 444 | voltage-controlled oscillator ($VCO_2$) of a second phase control loop, connected to the low-pass filter 442 and the fractional-N PLL frequency synthesizer 440 |
| 446 | low-pass filter in the transmit chain of the TRF6150 RF transceiver unit 401 |
| 448 | charge-pump phase-locked loop (CP-PLL) circuit of the single-chip direct-conversion RF transceiver 400 used for adjusting the output frequency of the voltage-controlled oscillator 448d (VCO) to the desired value |
| 448a | phase-frequency detector (PFD) of the CP-PLL circuit 448, connected to the input port of the charge pump 448b, which is used to filter input phase noise and provides an output voltage proportional to the phase difference between the input frequency of the CP-PLL circuit 448 and the down-scaled frequency at the output port of the frequency divider 448f |
| 448b | charge pump of the CP-PLL circuit 448, driven by two DC current sources, which converts the digital signal supplied by the PFD 448a to a control voltage for the VCO 448d by eliminating the DC phase error in the analog input signal of the CP-PLL circuit 448 and, in combination with the PFD 448a, provides either positive or negative charge pulses, depending on whether the reference signal phase of the up-converted baseband signal to be transmitted leads or lags the divided VCO signal phase |
| 448c | loop filter of the charge pump PLL circuit 448, realized as a low-pass filter, which integrates the charge pulses supplied by the charge pump 448b to generate a tuning voltage which changes the frequency of the VCO 448d up or down until the phases of the up-converted baseband signal to be transmitted and the down-divided VCO output signal are synchronized |
| 448d | voltage-controlled oscillator (VCO) of the charge pump PLL circuit 448, capable of dual-band operation |
| 448e | Power divider (PAD) in the feedback loop of the CP-PLL circuit 448 |

Table: (continued)

| Depicted Features and their Corresponding Reference Signs | |
|---|---|
| No. | System Component or Procedure Step |
| 448f | frequency down converter in the feedback loop of the CP-PLL circuit 448, consisting of an oscillator-driven mixer 448f1 followed by a low-pass filter 448f2 |
| 448f1 | mixer of the frequency divider 448f, driven by the local oscillator 444 |
| 448f2 | low-pass filter of the frequency divider 448f |
| 450 | power amplifier (PA) in the transmit chain of the single-chip direct-conversion GSM/GPRS transceiver architecture 400, capable of dual-band operation |
| 500 | single-chip analog front end of a digital multi-standard two-channel direct-conversion quadrature receiver architecture with quad-band GSM/GPRS capability according to the present invention |
| 502 | Rx antenna of the analog front end 500 |
| 504 | antenna switch of the analog front end 500 |
| 505a | 1st reception chain of the analog front end 500 for receiving RF signals with spectral components in a first frequency band (UMTS FDD Rx), whose frequencies take on values from a first frequency interval ranging from 2,110 MHz to 2,170 MHz |
| 505b | 2nd reception chain of the analog front end 500 for receiving RF signals with spectral components in a second frequency band (UMTS TDD1 Rx), whose frequencies take on values from a second frequency interval ranging from 1,900 MHz to 1,920 MHz |
| 505c | 3rd reception chain of the analog front end 500 for receiving RF signals with spectral components in a third frequency band (UMTS TDD2 Rx), whose frequencies take on values from a third frequency interval ranging from 2,010 MHz to 2,025 MHz |
| 505d | 4th reception chain of the analog front end 500 for receiving RF signals with spectral components in a fourth frequency band (GSM/GPRS 850 MHz Rx), whose frequencies take on values from a fourth frequency interval ranging from 869 MHz to 894 MHz |
| 505e | 5th reception chain of the analog front end 500 for receiving RF signals with spectral components in a fifth frequency band (GSM/GPRS 900 MHz Rx), whose frequencies take on values from a fifth frequency interval ranging from 935 MHz to 960 MHz |
| 505f | 6th reception chain of the analog front end 500 for receiving RF signals with spectral components in a sixth frequency band (GSM/GPRS (DCS) 1,800 MHz Rx), whose frequencies take on values from a sixth frequency interval ranging from 1,805 MHz to 1,880 MHz |
| 505g | 7th reception chain of the analog front end 500 for receiving RF signals with spectral components in a seventh frequency band (GSM/GPRS (PCS) 1,900 MHz Rx), whose frequencies take on values from a seventh frequency interval ranging from 1,930 MHz to 1,990 MHz |
| 506a | 1st band-select (duplexer) filter ($BPF_1$), placed at the input port of a first reception chain of the analog front end 500 for attenuating spurious out-of-band components contained in the signal spectrum of a first RF signal, whose passband is set such that frequencies of spectral components within a first frequency band (UMTS FDD Rx) take on values from a first frequency interval ranging from 2,110 MHz to 2,170 MHz |
| 506b | 2nd band-select (duplexer) filter ($BPF_2$), placed at the input port of a second reception chain of the analog front end 500 for attenuating spurious out-of-band components contained in the signal spectrum of a second RF signal, whose passband is set such that frequencies of spectral components within a second frequency band (UMTS TDD1 Rx) take on values from a second frequency interval ranging from 1,900 MHz to 1,920 MHz |
| 506c | 3rd band-select (duplexer) filter ($BPF_3$), placed at the input port of a third reception chain of the analog front end 500 for attenuating spurious out-of-band components contained in the signal spectrum of a third RF signal, whose passband is set such that frequencies of spectral components within a third frequency band (UMTS TDD2 Rx) take on values from a third frequency interval ranging from 2,010 MHz to 2,025 MHz |

Table: (continued)

| Depicted Features and their Corresponding Reference Signs | |
|---|---|
| No. | System Component or Procedure Step |
| 506d | 4th band-select (duplexer) filter ($BPF_4$), placed at the input port of a fourth reception chain of the analog front end 500 for attenuating spurious out-of-band components contained in the signal spectrum of a fourth RF signal, whose passband is set such that frequencies of spectral components within a fourth frequency band (GSM/GPRS 850 MHz Rx) take on values from a fourth frequency interval ranging from 869 MHz to 894 MHz |
| 506e | 5th band-select (duplexer) filter ($BPF_5$), placed at the input port of a fifth reception chain of the analog front end 500 for attenuating spurious out-of-band components contained in the signal spectrum of a fifth RF signal, whose passband is set such that frequencies of spectral components within a fifth frequency band (GSM/GPRS 900 MHz Rx) take on values from a fifth frequency interval ranging from 935 MHz to 960 MHz |
| 506f | 6th band-select (duplexer) filter ($BPF_6$), placed at the input port of a sixth reception chain of the analog front end 500 for attenuating spurious out-of-band components contained in the signal spectrum of a sixth RF signal, whose passband is set such that frequencies of spectral components within a sixth frequency band (GSM/GPRS (DCS) 1,800 MHz Rx) take on values from a sixth frequency interval ranging from 1,805 MHz to 1,880 MHz |
| 506g | 7th band-select (duplexer) filter ($BPF_7$), placed at the input port of a seventh reception chain of the analog front end 500 for attenuating spurious out-of-band components contained in the signal spectrum of a seventh RF signal, whose passband is set such that frequencies of spectral components within a seventh frequency band (GSM/GPRS (PCS) 1,900 MHz Rx) take on values from a seventh frequency interval ranging from 1,930 MHz to 1,990 MHz |
| 508a | 1st wideband low-noise amplifier ($LNA_1$) for amplifying received RF signals, placed in the reception chain for the first frequency band (UMTS FDD Rx) |
| 508b | 2nd wideband low-noise amplifier ($LNA_2$) for amplifying received RF signals, placed in the reception chain for the second frequency band (UMTS TDD1Rx) |
| 508c | 3rd wideband low-noise amplifier ($LNA_3$) for amplifying received RF signals, placed in the reception chain for the third frequency band (UMTS TDD2 Rx) |
| 508d | 4th wideband low-noise amplifier ($LNA_4$) for amplifying received RF signals, placed in the reception chain for the forth frequency band (GSM/GPRS 850 Rx) |
| 508e | 5th wideband low-noise amplifier ($LNA_5$) for amplifying received RF signals, placed in the reception chain for the fifth frequency band (GSM/GPRS 900 Rx) |
| 508f | 6th wideband low-noise amplifier ($LNA_6$) for amplifying received RF signals, placed in the reception chain for the sixth frequency band (GSM/GPRS (DCS) 1,800 Rx) |
| 508g | 7th wideband low-noise amplifier ($LNA_7$) for amplifying received RF signals, placed in the reception chain for the seventh frequency band (GSM/GPRS (PCS) 1,900 Rx) |
| 510a | 1st channel-select switch for selectively receiving RF signals spectra whose frequencies take on values from said first (UMTS FDD Rx), second (UMTS TDD1 Rx) or third frequency band (UMTS TDD2 Rx) |
| 510b | 2nd channel-select switch for selectively receiving RF signals spectra whose frequencies take on values from said fourth (GSM/GPRS 850 MHz Rx), fifth (GSM/GPRS 900 MHz Rx), sixth (GSM/GPRS (DCS) 1,800 MHz Rx) or seventh frequency band (GSM/GPRS (PCS) 1,900 MHz Rx) |
| 511a | 1st signal processing chain of the analog front end 500 for the reception of UMTS channels whose frequencies take on values from said first (UMTS FDD Rx), second (UMTS TDD 1 Rx) or third frequency band (UMTS TDD2 Rx) |
| 511b | 2nd signal processing chain of the analog front end 500 for the reception of GSM/GPRS channels whose frequencies take on values from said fourth (GSM/GPRS 850 MHz Rx), fifth (GSM/GPRS 900 MHz Rx), sixth (GSM/GPRS (DCS) 1,800 MHz Rx) or seventh frequency band (GSM/GPRS (PCS) 1,900 MHz Rx) |

Table: (continued)

| Depicted Features and their Corresponding Reference Signs | |
|---|---|
| No. | System Component or Procedure Step |
| 512a | balun transformer of the first signal processing chain 511a, used for impedance matching between the unbalanced Rx antenna 502 and the two balanced baseband output ports for the in-phase ($I_1$) and the quadrature ($Q_1$) channel of the first reception chain |
| 512b | balun transformer of the second signal processing chain 511b, used for impedance matching between the unbalanced Rx antenna 502 and the two balanced baseband output ports for the in-phase ($I_2$) and the quadrature ($Q_2$) channel of the second reception chain |
| 514 | frequency synthesizer of the two demodulation stages 515a+b |
| 515a | 1st demodulation stage for the first signal processing chain 511a of the analog front end 500 |
| 515b | 2nd demodulation stage for the second signal processing chain 511b of the analog front end 500 |
| 516a | 1st down-conversion mixer of the first demodulation stage 515a, driven by the frequency synthesizer 514, for generating the corresponding in-phase ($I_1$) signal of a received RF signal whose frequencies take on values from the first (UMTS FDD Rx), second (UMTS TDD1 Rx) or third frequency band (UMTS TDD2 Rx) by executing a direct down-conversion of the respective RF signal spectrum from the passband (RF) to the baseband |
| 516b | 2nd down-conversion mixer of the first demodulation stage 515a, driven by the frequency synthesizer 514, for generating the corresponding quadrature ($Q_1$) signal of a received RF signal whose frequencies take on values from the first (UMTS FDD Rx), second (UMTS TDD1 Rx) or third frequency band (UMTS TDD2 Rx) by executing a direct down-conversion of the respective RF signal spectrum from the passband (RF) to the baseband |
| 516c | 1st down-conversion mixer of the second demodulation stage 515b, driven by the frequency synthesizer 514, for generating the corresponding in-phase ($I_2$) signal of a received RF signal whose frequencies take on values from the fourth (GSM/GPRS 850 MHz Rx), fifth (GSM/GPRS 900 MHz Rx), sixth (GSM/ GPRS (DCS) 1,800 MHz Rx) or seventh frequency band (GSM/GPRS (PCS) 1,900 MHz Rx) by executing a direct down-conversion of the respective RF signal spectrum from the passband (RF) to the baseband |
| 516d | 2nd down-conversion mixer of the second demodulation stage 515b, driven by the frequency synthesizer 514, for generating the corresponding quadrature ($Q_2$) signal of a received RF signal whose frequencies take on values from the fourth (GSM/GPRS 850 MHz Rx), fifth (GSM/GPRS 900 MHz Rx), sixth (GSM/ GPRS (DCS) 1,800 MHz Rx) or seventh frequency band (GSM/GPRS (PCS) 1,900 MHz Rx) by executing a direct down-conversion of the respective RF signal spectrum from the passband (RF) to the baseband |
| 518a | 90-degree phase shifter (Hilbert transformer) of the first demodulation stage 515a, connected to respectively one input port of the down-conversion mixer 516b |
| 518b | 90-degree phase shifter (Hilbert transformer) of the second demodulation stage 515b, connected to respectively one input port of the down-conversion mixer 516d |
| 520a | high-pass filter ($HPF_{I1}$) in the in-phase ($I_1$) channel of the first signal processing chain 511a for eliminating DC offsets in the obtained in-phase signal of a received RF signal from the first (UMTS FDD Rx), second (UMTS TDD1 Rx) or third frequency band (UMTS TDD2 Rx) |
| 520b | high-pass filter ($HPF_{Q1}$) in the quadrature ($Q_1$) channel of the first signal processing chain 511a for eliminating DC offsets in the obtained quadrature signal of a received RF signal from the first (UMTS FDD Rx), second (UMTS TDD1 Rx) or third frequency band (UMTS TDD2 Rx) |
| 520c | high-pass filter ($HPF_{I2}$) in the in-phase ($I_2$) channel of the second signal processing chain 511b for eliminating DC offsets in the obtained in-phase signal of a received RF signal from the fourth (GSM/ GPRS 850 MHz Rx), fifth (GSM/GPRS 900 MHz Rx), sixth (GSM/GPRS (DCS) 1,800 MHz Rx) or seventh frequency band (GSM/GPRS (PCS) 1,900 MHz Rx) |

Table: (continued)

| Depicted Features and their Corresponding Reference Signs | |
|---|---|
| No. | System Component or Procedure Step |
| 520d | high-pass filter ($HPF_{Q2}$) in the quadrature ($Q_2$) channel of the second signal processing chain 511b for eliminating DC offsets in the obtained quadrature signal of a received RF signal from the fourth (GSM/ GPRS 850 MHz Rx), fifth (GSM/GPRS 900 MHz Rx), sixth (GSM/GPRS (DCS) 1,800 MHz Rx) or seventh frequency band (GSM/ GPRS (PCS) 1,900 MHz Rx) |
| 522a | channel-select filter in the in-phase ($I_1$) channel of the first signal processing chain 511a for rejecting RF signals on channels adjacent to that of the desired first (UMTS FDD Rx), second (UMTS TDD1 Rx) or third frequency band (UMTS TDD2 Rx), realized as a low-pass filter ($LPF_{I1}$) |
| 522b | channel-select filter in the quadrature ($Q_1$) channel of the first signal processing chain 511a for rejecting RF signals on channels adjacent to that of the desired first (UMTS FDD Rx), second (UMTS TDD1 Rx) or third frequency band (UMTS TDD2 Rx), realized as a low-pass filter ($LPF_{Q1}$) |
| 522c | channel-select filter in the in-phase ($I_2$) channel of the second signal processing chain 511b for rejecting RF signals on channels adjacent to that of the desired fourth (GSM/ GPRS 850 MHz Rx), fifth (GSM/ GPRS 900 MHz Rx), sixth (GSM/GPRS (DCS) 1,800 MHz Rx) or seventh frequency band (GSM/GPRS (PCS) 1,900 MHz Rx), realized as a low-pass filter ($LPF_{I2}$) |
| 522d | channel-select filter in the quadrature ($Q_2$) channel of the second signal processing chain 511b for rejecting RF signals on channels adjacent to that of the desired fourth (GSM/GPRS 850 MHz Rx), fifth (GSM/GPRS 900 MHz Rx), sixth (GSM/GPRS (DCS) 1,800 MHz Rx) or seventh frequency band (GSM/ GPRS (PCS) 1,900 MHz Rx), realized as a low-pass filter ($LPF_{Q2}$) |
| 524a | variable-gain amplifier ($VGA_{I1}$) in the in-phase ($I_1$) channel of the first signal processing chain 511a for amplifying the obtained in-phase signal |
| 524b | variable-gain amplifier ($VGA_{Q1}$) in the quadrature ($Q_1$) channel of the first signal processing chain 511a for amplifying the obtained quadrature signal |
| 524c | variable-gain amplifier ($VGA_{I2}$) in the in-phase ($I_2$) channel of the second signal processing chain 511b for amplifying the obtained in-phase signal |
| 524d | variable-gain amplifier ($VGA_{Q2}$) in the quadrature ($Q_2$) channel of the second signal processing chain 511b for amplifying the obtained quadrature signal |
| 526a | analog-to-digital converter ($ADC_{I1}$), connected to the output port of the in-phase ($I_1$) channel 528a of the first signal processing chain 511a, which provides a time- and amplitude-quantized time-domain representation of the corresponding in-phase signal for the received RF signal spectrum of either said first (UMTS FDD Rx), second (UMTS TDD1 Rx) or third frequency band (UMTS TDD2 Rx) |
| 526b | analog-to-digital converter ($ADC_{Q1}$), connected to the output port of the quadrature ($Q_1$) channel 528b of the first signal processing chain 511a, which provides a time-and amplitude-quantized time-domain representation of the corresponding quadrature signal for the received RF signal spectrum of either said first (UMTS FDD Rx), second (UMTS TDD1 Rx) or third frequency band (UMTS TDD2 Rx) |
| 526c | sigma-delta analog-to-digital converter ($SDADC_{I2}$), connected to the output port of the in-phase ($I_2$) channel 528c of the second signal processing chain 511b, which provides a time- and amplitude-quantized time-domain representation of the corresponding in-phase signal for the received RF signal spectrum of either said fourth (GSM/GPRS 850 MHz Rx), fifth (GSM/GPRS 900 MHz Rx), sixth (GSM/ GPRS (DCS) 1,800 MHz Rx) or seventh frequency band (GSM/GPRS (PCS) 1,900 MHz Rx) |
| 526d | sigma-delta analog-to-digital converter ($SDADC_{Q2}$), connected to the output port of the quadrature ($Q_2$) channel 528d of the second signal processing chain 511b, which provides a time- and amplitude-quantized time-domain representation of the corresponding quadrature signal for the received RF signal spectrum of either said fourth (GSM/GPRS 850 MHz Rx), fifth (GSM/GPRS 900 MHz Rx), sixth (GSM/ GPRS (DCS) 1,800 MHz Rx) or seventh frequency band (GSM/GPRS (PCS) 1,900 MHz Rx) |
| 528a | in-phase ($I_1$) channel of the of the first signal processing chain 511a |
| 528b | quadrature ($Q_1$) channel of the of the first signal processing chain 511a |

Table: (continued)

| Depicted Features and their Corresponding Reference Signs | |
|---|---|
| No. | System Component or Procedure Step |
| 528c | in-phase ($I_2$) channel of the of the second signal processing chain 511b |
| 528d | quadrature ($Q_2$) channel of the of the second signal processing chain 511b |
| Rx1 | first downlink channel (Rx1), whose frequencies take on values from a first frequency band (UMTS FDD Rx) ranging from 2,110 MHz to 2,170 MHz |
| Rx2 | second downlink channel (Rx2), whose frequencies take on values from a second frequency band (UMTS TDD1 Rx) ranging from 1,900 MHz to 1,920 MHz |
| Rx3 | third downlink channel (Rx3), whose frequencies take on values from a third frequency band (UMTS TDD2 Rx) ranging from 2,010 MHz to 2,025 MHz |
| Rx4 | fourth downlink channel (Rx4), whose frequencies take on values from a fourth frequency band (GSM/GPRS 850 MHz Rx) ranging from 869 MHz to 894 MHz |
| Rx5 | fifth downlink channel (Rx5), whose frequencies take on values from a fifth frequency band (GSM/GPRS 900 MHz Rx) ranging from 935 MHz to 960 MHz |
| Rx6 | sixth downlink channel (Rx6), whose frequencies take on values from a sixth frequency band (GSM/GPRS (DCS) 1,800 MHz Rx) ranging from 1,805 MHz to 1,880 MHz |
| Rx7 | seventh downlink channel (Rx7), whose frequencies take on values from a seventh frequency band (GSM/GPRS (PCS) 1,900 MHz Rx) ranging from 1,930 MHz to 1,990 MHz |
| S1 | step #1: splitting an RF input signal into seven downlink channels (Rx1, Rx2, Rx3 and Rx4, Rx5, Rx6, Rx7) |
| S2 | step #2: selectively switching a modulated RF signal spectrum received via one of said three wideband downlink channels (Rx1, Rx2, Rx3) to a first signal processing chain 511a and selectively switching a modulated RF signal spectrum received via one of said four narrowband downlink channels (Rx4, Rx5, Rx6, Rx7) to a second signal processing chain 511b |
| S3 | step #3: respectively splitting said first signal processing chain 511a and second signal processing chain 511b into one in-phase 528a+c and one quadrature channel 528b+d and performing an impedance matching by transforming unbalanced RF input signals into balanced RF signals in order to obtain balanced baseband output signals ($I_1$, $Q_1$, $I_2$, $Q_2$), thereby isolating the unbalanced RF input port 502 from the balanced baseband output ports of the in-phase channels 528a+c and quadrature channels 528b+d of a first number 505a-c and a second number of reception chains 505d-g, respectively |
| S4 | step #4: setting the resolution ($R_1$ and $R_2$ or $R_3$ and $R_4$) of the amplitude quantization dependent on the required dynamic range ($S_1/N_1$ and $S_2/N_2$ or $S_3/N_3$ and $S_4/N_4$) of the obtained baseband signal spectrum and thus dependent on the bandwidth ($B_1$, $B_2$, $B_3$, $B_4$, $B_5$, $B_6$, or $B_7$) of the respective downlink channel (Rx1, Rx2, Rx3, Rx4, Rx5, Rx6, or Rx7) used for the reception of the corresponding RF signal spectrum |
| S5 | step #5: adapting the sampling rate ($f_{s,1}$ and $f_{s,2}$ or $f_{s,3}$ and $f_{s,4}$) of the time quantization to the bandwidth ($B_1$ and $B_2$ or $B_3$ and $B_4$) of the obtained baseband signal spectrum such that a predefined oversampling ratio ($M$) is attained and thus the Nyquist sampling theorem is fulfilled |

## Claims

**1.** A front end of a multi-standard direct-conversion quadrature receiver comprising a single unbalanced RF input port (502) and two pairs of balanced baseband output ports ($I_1$, $Q_1$ and $I_2$, $Q_2$), said front end (500) having at least a first (505a-c) and a second number of reception chains (505d-g) as well as a first (511a) and a second signal processing chain (511b), wherein each signal processing chain (511a and 511b) is split up into one in-phase (528a+c) and one quadrature channel (528b+d),

**characterized in that**

said front end (500) comprises means (502, 504, 506a-g, 508a-g, 510a+b, 512a+b, 514, 516a-d, 518a+b, 520a-d, 522a-d, 524a-d, and 526a-d) for processing RF signals of at least three wideband downlink channels (Rx1, Rx2, Rx3) received via one reception chain (505a-c) of said first number, which are assigned to three non-overlapping frequency bands (UMTS FDD Rx, UMTS TDD1 Rx, and UMTS TDD2 Rx), and at least four narrowband downlink channels (Rx4, Rx5, Rx6, Rx7) received via one reception chain (505d-g) of said second number, that are assigned to at least four further non-overlapping frequency bands (GSM/ GPRS 850 MHz Rx, GSM/GPRS 900 MHz Rx, GSM/GPRS (DCS) 1,800 MHz Rx, and GSM/GPRS (PCS) 1,900 MHz Rx), from the RF passband to a baseband ($I_1$, $Q_1$, $I_2$, $Q_2$).

**2.** A front end according to claim 1,
comprising

- band-select filters (506a-g) respectively placed at the input ports of said reception chains (505a-g), respectively,
- two demodulation stages (515a+b), each equipped with a pair of down-conversion mixers (516a+c or 516b+d) that are assigned to the in-phase (528a/c) and quadrature channel (528b/d) of the respective signal processing chain (511a/b), and two Hilbert transformers (518a+b), connected to respectively one input port of the down-conversion mixers (516b and 516d) in the quadrature channels (528b+d), providing a 90-degree phase shift of an oscillator signal for a direct down-conversion of received RF signals from the RF passband to the complex baseband ($I_1$, $Q_1$, $I_2$, $Q_2$),
- a frequency synthesizing unit (514), connected to the down-conversion mixers (516a-d) in the in-phase (528a+c) and quadrature chains (528b+d) of the two demodulation stages (515a+b), providing a signal with essentially constant frequency,
- at least two channel-select switches (510a+b) for selectively switching (S2) either said first (505a-c) or said second number of reception chains (505d-g) to said first (511a) or second signal processing chain (511b) and
- signal splitting means (512a+b) for respectively splitting (S3) said first (511a) and second signal processing chain (511b) into one in-phase (528a+c) and one quadrature channel (528b+d).

**3.** A front end according to claim 2,
**characterized in that**
said signal splitting means (512a+b) are realized as two impedance-matching balun transformers (512a+b) converting unbalanced RF input signals into balanced signals, thereby isolating (S3) the unbalanced RF input port (502) from the balanced baseband output ports of the in-phase (528a+c) and quadrature (528b+d) channel of said first (505a-c) and second number of reception chains (505d-g), respectively.

**4.** A front end according to anyone of the claims 2 or 3,
**characterized by**
at least four high-pass filter ($HPF_{I1}$, $HPF_{Q1}$, $HPF_{I2}$, $HPF_{Q2}$), connected to the output ports of the down-conversion mixers (516a-d) of the two demodulation stages (515a+b) in the in-phase (528a+c) and quadrature channels (528b+d) of the first and second signal processing chain (511a+b), for eliminating DC offsets in the corresponding baseband signals ($I_1$, $I_2$, $Q_1$, $Q_2$) of received RF signals.

**5.** A front end according to anyone of the claims 1 to 4,
comprising two analog-to-digital converters (526a+b), connected to the in-phase ($I_1$) and quadrature ($Q_1$) output ports of the first signal processing chain (511a), and two sigma-delta analog-to-digital converters (526c+d), connected to the in-phase ($I_2$) and quadrature ($Q_2$) output ports of the second signal processing chain (511b), which provide a time- and amplitude-quantized time-domain representation of the down-converted RF signal spectrum of either said first (Rx1, Rx2, and Rx3) or said second downlink channel (Rx4, Rx5, Rx6, and Rx7),
**characterized in that**
said analog-to-digital converters (526a+b) and/or sigma-delta analog-to-digital converters (526c+d) are adapted to set (S4) the resolution ($R_1$ and $R_2$ or $R_3$ and $R_4$) of the amplitude quantization executed by means of the respective analog-to-digital converter (526a+b) and/or sigma-delta analog-to-digital converter (526c+d) dependent on the respectively required dynamic range ($S_1/N_1$ and $S_2/N_2$ or $S_3/N_3$ and $S_4/N_4$) of the obtained baseband signal spectrum and thus dependent on the bandwidth ($B_1$, $B_2$, $B_3$, $B_4$, $B_5$, $B_6$, or $B_7$) of the respective downlink channel (Rx1, Rx2, Rx3, Rx4, Rx5, Rx6, or Rx7) used for the reception of the corresponding RF signal spectrum.

**6.** A front end according to claim 5,
**characterized in that**
said analog-to-digital converters (526a+b) and/or sigma-delta analog-to-digital converters (526c+d) are further adapted to change (S5) the sampling rate ($f_{s,1}$ and $f_{s,2}$ or $f_{s,3}$ and $f_{s,4}$) of the time quantization based on the signal

bandwidth ($B_1$ and $B_2$ or $B_3$ and $B_4$) of the obtained baseband signal spectrum in such a way that a predetermined oversampling ratio ($M$) is attained and thus the Nyquist sampling theorem is fulfilled.

**7.** A front end according to anyone of the preceding claims,
**characterized in that**
the RF passbands of the band-select filters (506a-g) are respectively set such that

- spectral components of RF signals received via the first downlink channel (Rx1), whose frequencies take on values from a first frequency band (UMTS FDD Rx) ranging from 2,110 MHz to 2,170 MHz,
- spectral components of RF signals received via the second downlink channel (Rx2), whose frequencies take on values from a second frequency band (UMTS TDD1 Rx) ranging from 1,900 MHz to 1,920 MHz,
- spectral components of RF signals received via the third downlink channel (Rx3), whose frequencies take on values from a third frequency band (UMTS TDD2 Rx) ranging from 2,010 MHz to 2,025 MHz,
- spectral components of RF signals received via the fourth downlink channel (Rx4), whose frequencies take on values from a fourth frequency band (GSM/GPRS 850 MHz Rx) ranging from 869 MHz to 894 MHz,
- spectral components of RF signals received via the fifth downlink channel (Rx5), whose frequencies take on values from a fifth frequency band (GSM/GPRS 900 MHz Rx) ranging from 935 MHz to 960 MHz,
- spectral components of RF signals received via the sixth downlink channel (Rx6), whose frequencies take on values from a sixth frequency band (GSM/GPRS (DCS) 1,800 MHz Rx) ranging from 1,805 MHz to 1,880 MHz, and finally
- spectral components of RF signals received via the seventh downlink channel (Rx7), whose frequencies take on values from a seventh frequency band (GSM/GPRS (PCS) 1,900 MHz Rx) ranging from 1,930 MHz to 1,990 MHz, are passed.

**8.** A method for selectively processing modulated RF signal spectra of at least three wideband downlink channels (Rx1, Rx2, Rx3), which are assigned to three non-overlapping frequency bands (UMTS FDD Rx, UMTS TDD1 Rx, and UMTS TDD2 Rx), and at least four narrowband downlink channels (Rx4, Rx5, Rx6, Rx7), which are assigned to at least four further non-overlapping frequency bands (GSM/ GPRS 850 MHz Rx, GSM/GPRS 900 MHz Rx, GSM/GPRS (DCS) 1,800 MHz Rx, and GSM/GPRS (PCS) 1,900 MHz Rx), from the RF passband to the complex baseband ($I_1$, $Q_1$, $I_2$, $Q_2$).

**9.** A method according to claim 8,
wherein received RF signals are unbalanced,
**characterized by** the following steps:

- splitting (S1) an RF input signal into at least seven downlink channels (Rx1, Rx2, Rx3 and Rx4, Rx5, Rx6, Rx7),
- selectively switching (S2) a modulated RF signal spectrum received via one of said three wideband downlink channels (Rx1, Rx2, Rx3) to a first signal processing chain (511a) and selectively switching (S2) a modulated RF signal spectrum received via one of said four narrowband downlink channels (Rx4, Rx5, Rx6, Rx7) to a second signal processing chain (511b), and
- performing an impedance matching (S3) by transforming the unbalanced RF input signals into balanced RF signals to obtain balanced baseband output signals ($I_1$, $Q_1$, $I_2$, $Q_2$).

**10.** A method according to anyone of the claims 8 or 9,
wherein the time-domain representation of a down-converted RF signal is submitted to a time and amplitude quantization,
**characterized by** the step of
setting (S4) the resolution ($R_1$ and $R_2$ or $R_3$ and $R_4$) of the amplitude quantization dependent on the required dynamic range ($S_1/N_1$ and $S_2/N_2$ or $S_3/N_3$ and $S_4/N_4$) of the obtained baseband signal spectrum and thus dependent on the bandwidth ($B_1$, $B_2$, $B_3$, $B_4$, $B_5$, $B_6$, or $B_7$) of the respective downlink channel (Rx1, Rx2, Rx3, Rx4, Rx5, Rx6, or Rx7) used for the reception of the corresponding RF signal spectrum.

**11.** A method according to claim 10,
**characterized by** the step of
adapting (S5) the sampling rate ($f_{s,1}$ and $f_{s,2}$ or $f_{s,3}$ and $f_{s,4}$) of the time quantization to the bandwidth ($B_1$ and $B_2$ or $B_3$ and $B_4$) of the obtained baseband signal spectrum such that a predefined oversampling ratio ($M$) is attained and thus the Nyquist sampling theorem is fulfilled.

**12.** A multi-standard two-channel direct-conversion quadrature receiver comprising a front end (500) according to anyone of the claims 1 to 7.

**13.** A mobile telecommunications device,
**characterized by**
a digital multi-standard two-channel direct-conversion quadrature receiver according to claim 12.

FIG 1A

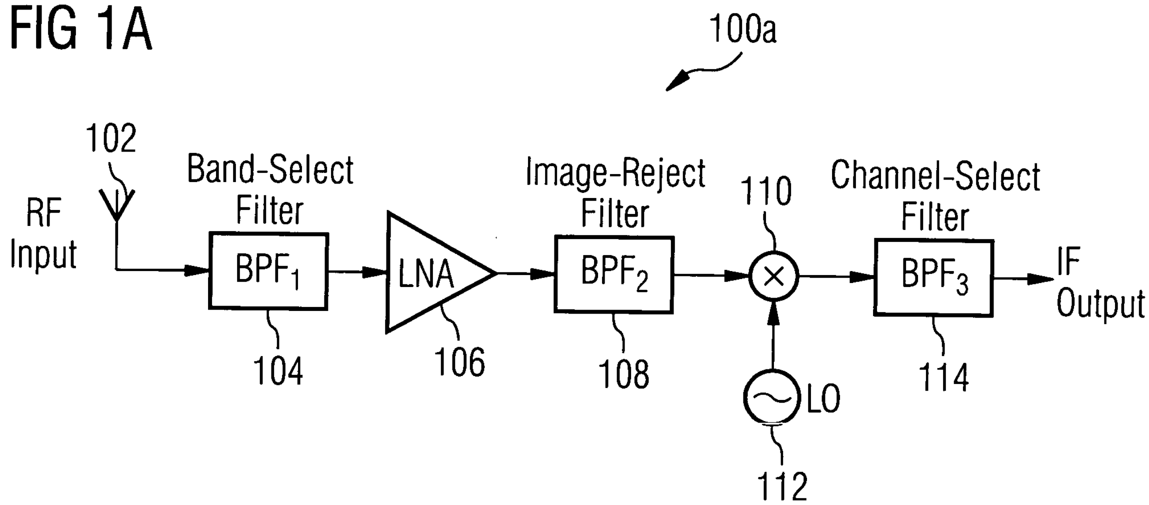
100a
102
RF
Input
Band-Select
Filter
$BPF_1$
104
LNA
106
Image-Reject
Filter
$BPF_2$
108
110
LO
112
Channel-Select
Filter
$BPF_3$
114
IF
Output

FIG 1B

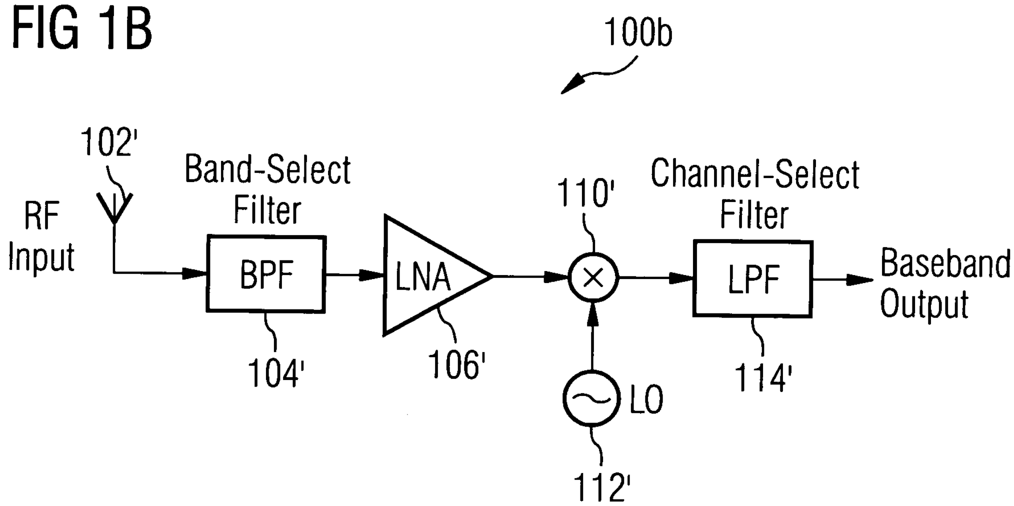
100b
102'
RF
Input
Band-Select
Filter
BPF
104'
LNA
106'
110'
LO
112'
Channel-Select
Filter
LPF
114'
Baseband
Output

FIG 1C

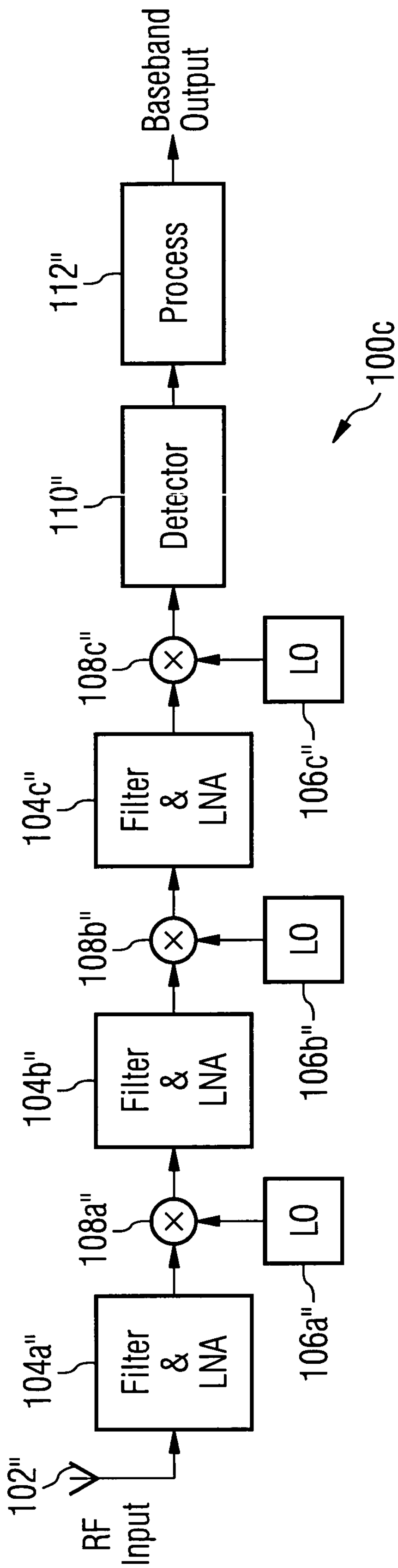
RF Input
102''
Filter & LNA
104a''
108a''
LO
106a''
Filter & LNA
104b''
108b''
LO
106b''
Filter & LNA
104c''
108c''
LO
106c''
Detector
110''
Process
112''
Baseband Output
100c

FIG 1D

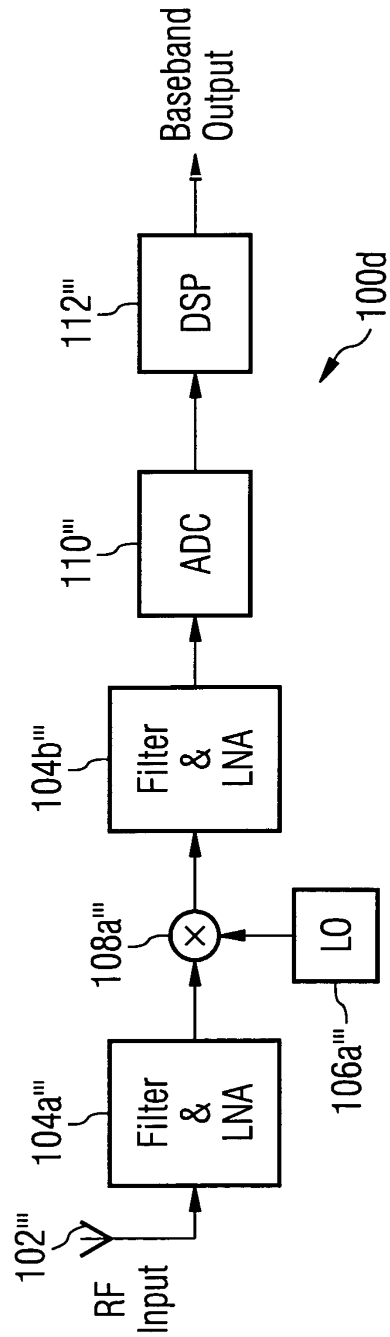
RF Input
102'''
Filter & LNA
104a'''
108a'''
LO
106a'''
Filter & LNA
104b'''
ADC
110'''
DSP
112'''
Baseband Output
100d

FIG 1E

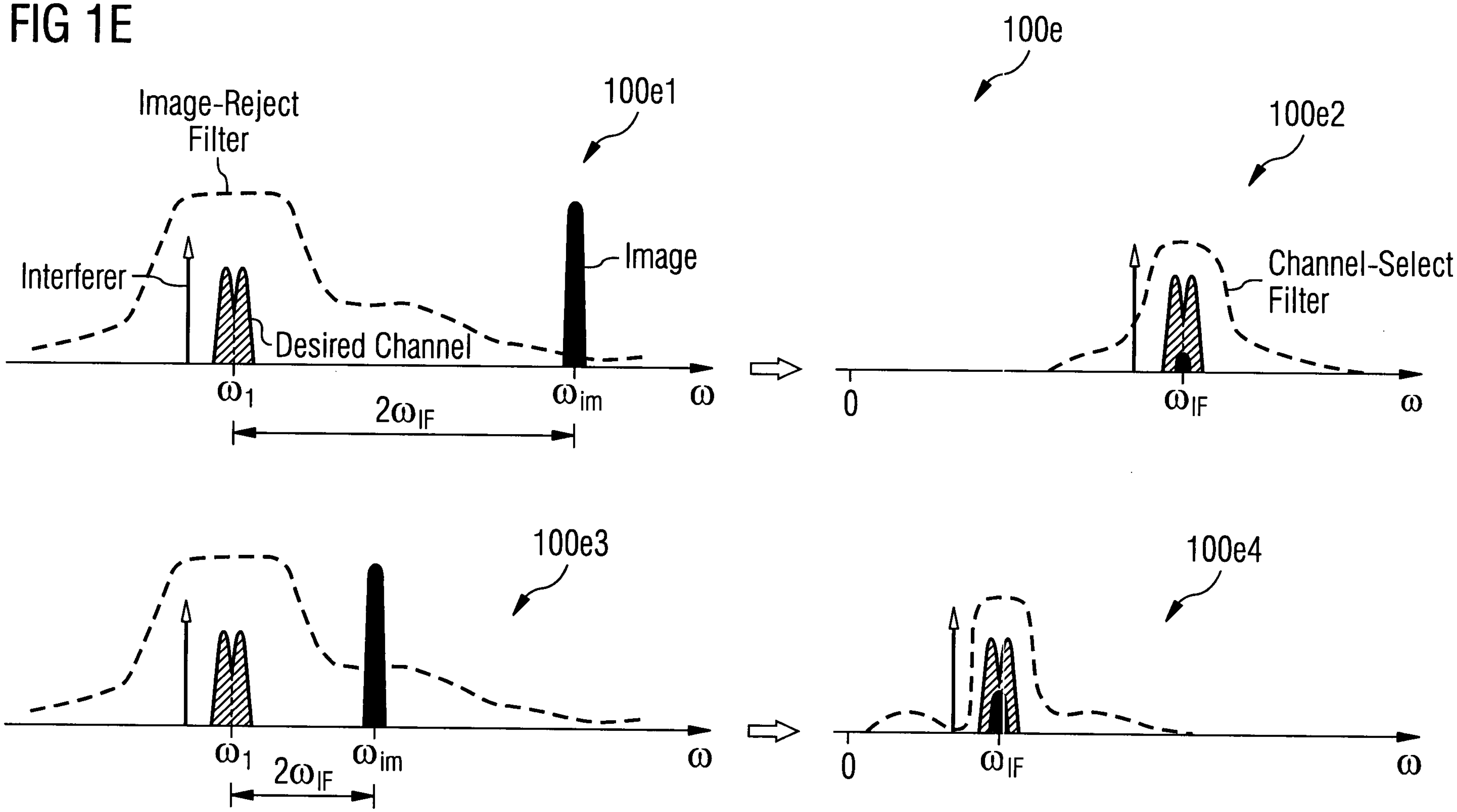
100e
100e1
Image-Reject
Filter
Interferer
Desired Channel
Image
ω1
ωim
2ωIF
ω
100e2
Channel-Select
Filter
0
ωIF
ω
100e3
ω1
ωim
2ωIF
ω
100e4
0
ωIF
ω

FIG 2

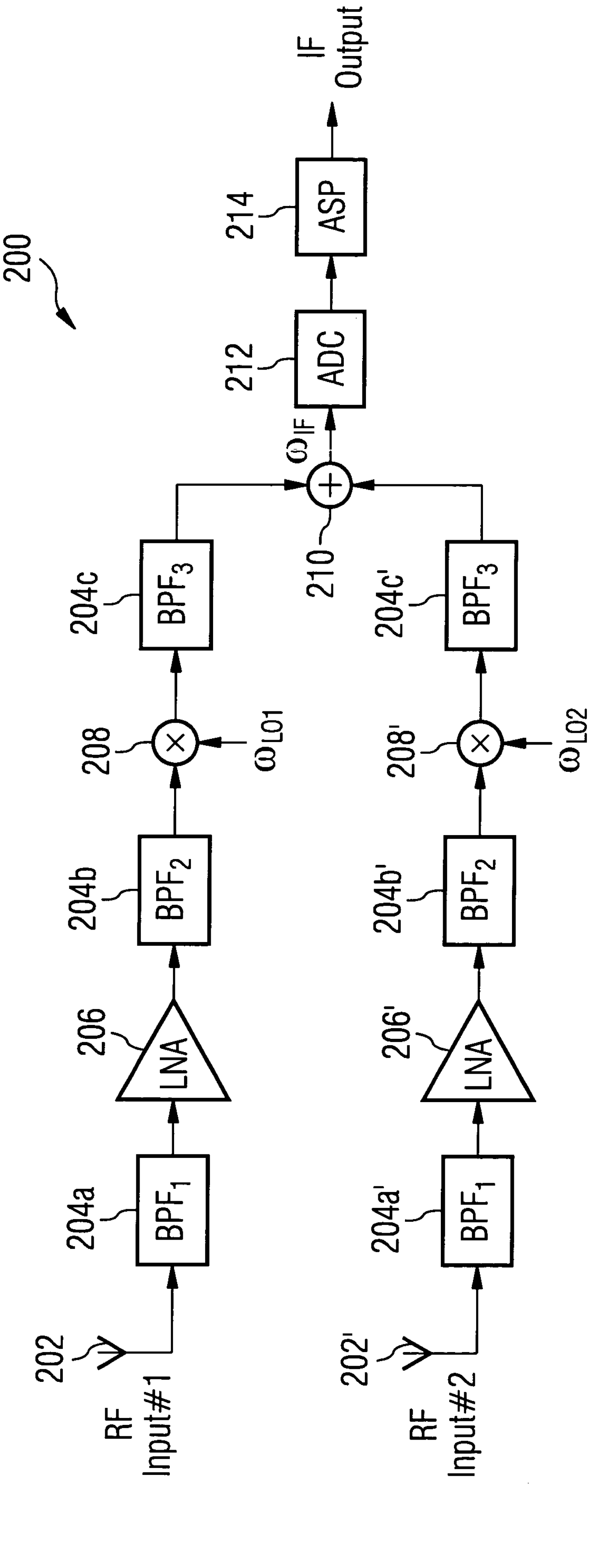
200
RF Input#1
202
204a
BPF1
206
LNA
204b
BPF2
208
ωLO1
204c
BPF3
210
ωIF
212
ADC
214
ASP
IF Output
RF Input#2
202'
204a'
BPF1
206'
LNA
204b'
BPF2
208'
ωLO2
204c'
BPF3

FIG 3

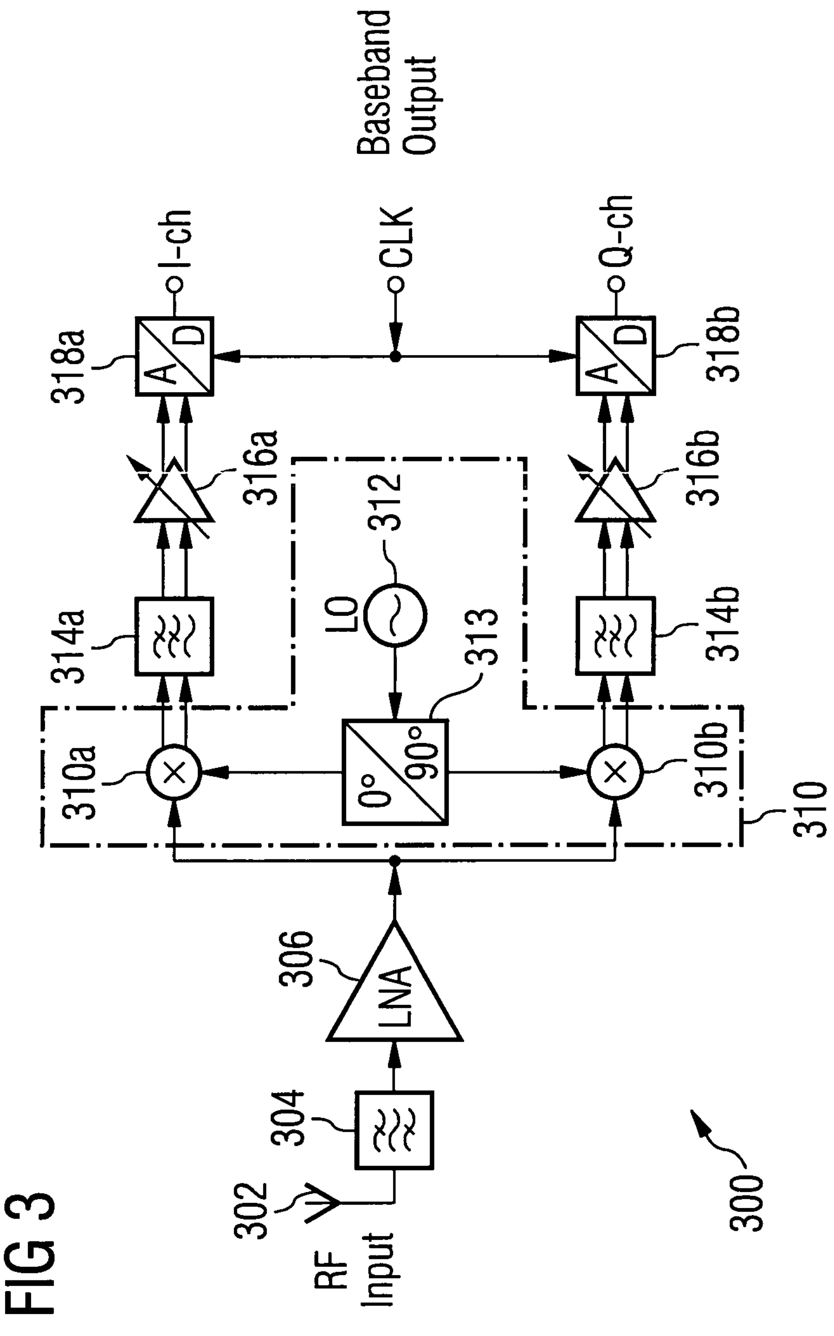

RF Input
302
304
306
LNA
310
310a
310b
0°
90°
313
LO
312
314a
314b
316a
316b
318a
318b
A
D
I-ch
Q-ch
CLK
Baseband Output
300

FIG 4

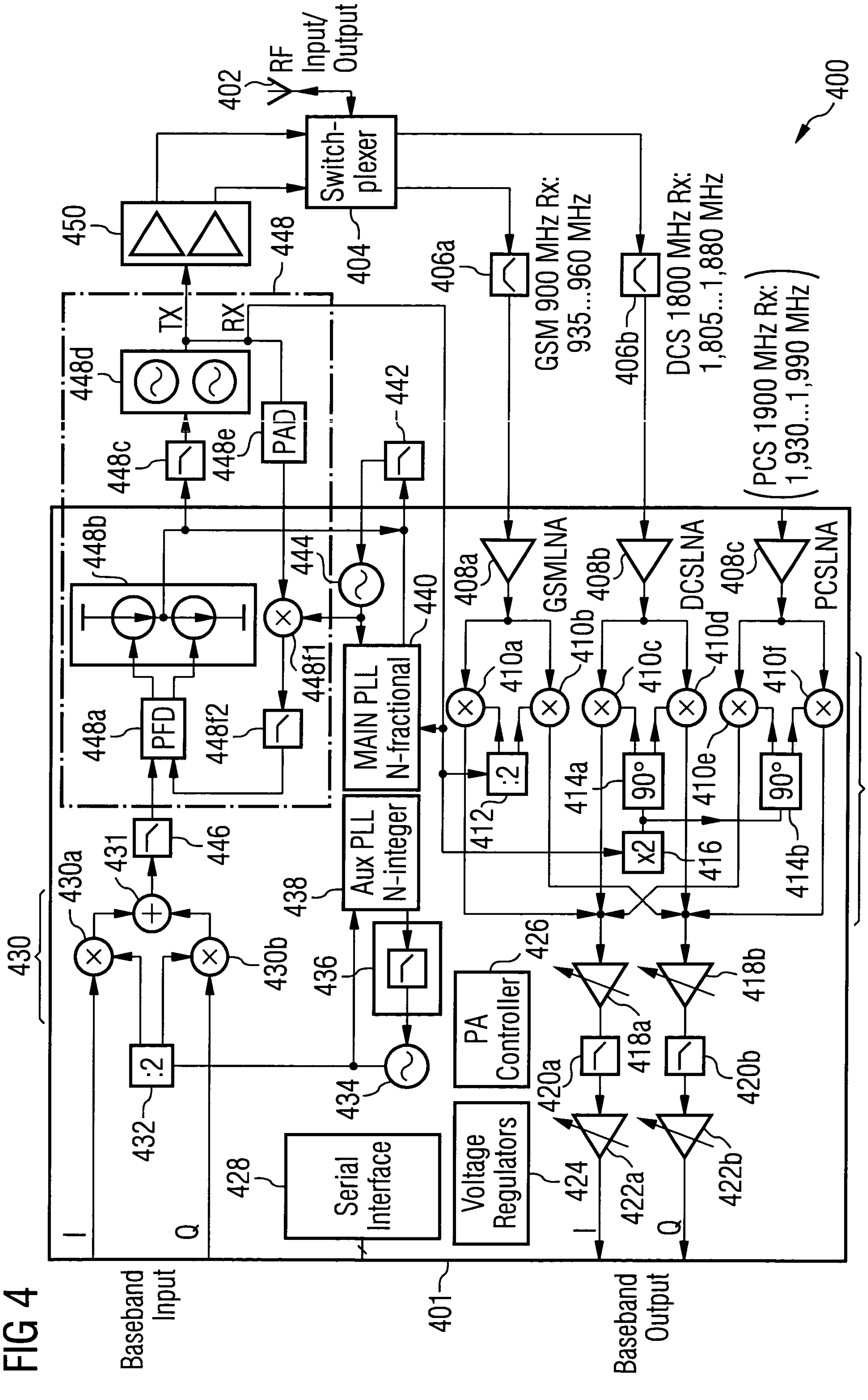
402
RF
Input/
Output
Switch-
plexer
404
450
448
448d
TX
RX
448c
448e
PAD
442
406a
GSM 900 MHz Rx:
935...960 MHz
406b
DCS 1800 MHz Rx:
1,805...1,880 MHz
PCS 1900 MHz Rx:
1,930...1,990 MHz
400
448b
444
440
408a
GSMLNA
408b
DCSLNA
408c
PCSLNA
410a
410b
410c
410d
410f
448a
PFD
448f2
448f1
MAIN PLL
N-fractional
412
:2
414a
90°
410e
90°
416
x2
414b
410
430
430a
431
446
438
Aux PLL
N-integer
436
426
418b
430b
PA
Controller
418a
420a
420b
432
:2
434
428
Serial
Interface
Voltage
Regulators
424
422a
422b
I
Q
I
Q
Baseband
Input
401
Baseband
Output

FIG 5

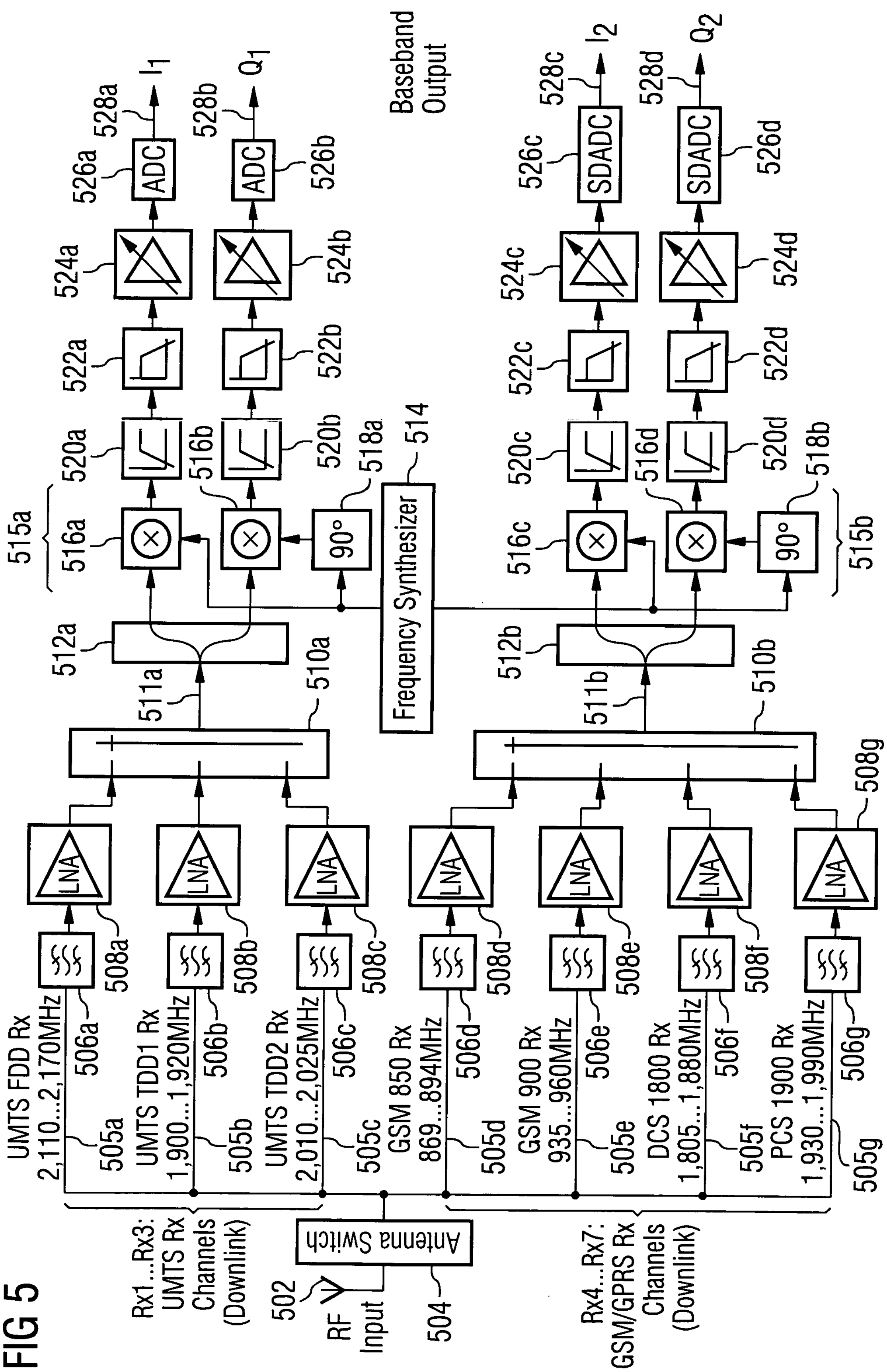

RF Input
502
504
Antenna Switch
Rx1...Rx3: UMTS Rx Channels (Downlink)
Rx4...Rx7: GSM/GPRS Rx Channels (Downlink)
UMTS FDD Rx 2,110...2,170MHz
UMTS TDD1 Rx 1,900...1,920MHz
UMTS TDD2 Rx 2,010...2,025MHz
GSM 850 Rx 869...894MHz
GSM 900 Rx 935...960MHz
DCS 1800 Rx 1,805...1,880MHz
PCS 1900 Rx 1,930...1,990MHz
505a
505b
505c
505d
505e
505f
505g
506a
506b
506c
506d
506e
506f
506g
508a
508b
508c
508d
508e
508f
508g
LNA
510a
510b
511a
511b
512a
512b
Frequency Synthesizer
514
515a
515b
516a
516b
516c
516d
518a
518b
90°
520a
520b
520c
520d
522a
522b
522c
522d
524a
524b
524c
524d
ADC
SDADC
526a
526b
526c
526d
528a
528b
528c
528d
$I_1$
$Q_1$
$I_2$
$Q_2$
Baseband Output

European Patent Office

# EUROPEAN SEARCH REPORT

Application Number
EP 03 00 9616

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | WO 02 47282 A (CLEMENT PATRICK ;KHLAT NADIM (FR); MOTOROLA INC (US)) 13 June 2002 (2002-06-13)<br>* abstract *<br>* page 5, line 1 - page 8, line 5 *<br>* figure 1 *<br>* figure 7 *<br>--- | 1-13 | H04B1/40<br>H04B1/30 |
| Y | WO 02 056489 A (QUALCOMM INC) 18 July 2002 (2002-07-18)<br>* abstract *<br>* paragraph [0050] - paragraph [0063] *<br>* figure 5 *<br>--- | 1-13 | |
| A | WO 03 030369 A (NOKIA CORP ;NOKIA INC (US)) 10 April 2003 (2003-04-10)<br>* abstract *<br>* page 4, line 1 - page 6, line 28 *<br>* page 11, line 1 - page 14, line 6 *<br>--- | 5,6,10, 11 | |
| A | EP 1 207 627 A (SONY INTERNAT EUROP GMBH) 22 May 2002 (2002-05-22)<br>* the whole document *<br>--- | 1-13 | TECHNICAL FIELDS SEARCHED (Int.Cl.7)<br>H04B |
| A | WO 02 27953 A (OLSSON HAAKAN ;SPIREA AB (SE); LI XIAOPENG (US)) 4 April 2002 (2002-04-04)<br>* abstract *<br>* page 3, line 14 - page 4, line 13 *<br>* page 5, line 34 - page 7, line 33 *<br>* figure 2 *<br>* figure 5 *<br>----- | 1-13 | |

The present search report has been drawn up for all claims

| Place of search | Date of completion of the search | Examiner |
|---|---|---|
| THE HAGUE | 25 September 2003 | Lindhardt, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 00 9616

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2003

| Patent document cited in search report | | Publication date | Patent family member(s) | | | Publication date |
|---|---|---|---|---|---|---|
| WO 0247282 | A | 13-06-2002 | EP | 1213844 | A1 | 12-06-2002 |
| | | | AU | 1057102 | A | 18-06-2002 |
| | | | WO | 0247282 | A2 | 13-06-2002 |
| WO 02056489 | A | 18-07-2002 | US | 2003040292 | A1 | 27-02-2003 |
| | | | CA | 2434048 | A1 | 18-07-2002 |
| | | | WO | 02056489 | A2 | 18-07-2002 |
| | | | WO | 02056490 | A2 | 18-07-2002 |
| | | | US | 2002132597 | A1 | 19-09-2002 |
| WO 03030369 | A | 10-04-2003 | US | 6577258 | B2 | 10-06-2003 |
| | | | WO | 03030369 | A2 | 10-04-2003 |
| EP 1207627 | A | 22-05-2002 | EP | 1207627 | A1 | 22-05-2002 |
| WO 0227953 | A | 04-04-2002 | AU | 9249001 | A | 08-04-2002 |
| | | | SE | 0003520 | A | 30-03-2002 |
| | | | WO | 0227953 | A1 | 04-04-2002 |

EPO FORM P0459

For more details about this annex : see Official Journal of the European Patent Office, No. 12/82